# EUROPEAN PATENT SPECIFICATION

(11) **EP 3 468 100 B1**
(45) Date of publication and mention of the grant of the patent: **14.04.2021**
(21) Application number: 17819063.3
(22) Date of filing: 08.06.2017
(51) Int. Cl.: H04L 12/24

(54) **METHOD AND APPARATUS FOR MANAGING NETWORK SLICE**
VERFAHREN UND VORRICHTUNG ZUR VERWALTUNG EINER NETZWERKSCHICHT
PROCÉDÉ ET APPAREIL DE GESTION DE TRANCHE DE RÉSEAU

(30) Priority: 30.06.2016 CN 201610514001
(43) Date of publication of application: 10.04.2019
(73) Proprietor: Huawei Technologies Co., Ltd., Longgang District Shenzhen, Guangdong 518129 (CN)
(72) Inventor: YANG, Shuigen, Shenzhen, Guangdong 518129 (CN); TAN, Wei, Shenzhen, Guangdong 518129 (CN); ZHANG, Wei, Shenzhen, Guangdong 518129 (CN)
(74) Representative: Pfenning, Meinig & Partner mbB
(86) International application number: PCT/CN2017/087607
(87) International publication number: WO 2018/001066

(56) References cited:
- CN-A- 104 685 935
- US-A1- 2012 233 302
- US-A1- 2014 331 100
- ZTE: "NextGen Core Architecture solution for sharing Network Function across multiple Network Slices", 3GPP DRAFT; S2-16XXXX_ZTE_NETWORK SLICING SOLUTION D2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. SOPHIA ANTIPOLIS; 20160411 - 20160415 1 April 2016 (2016-04-01), XP051086379, Retrieved from the Internet: URL:http://www.3gpp.org/ftp/tsg_sa/WG2_Arc h/TSGS2_114_Sophia_Antipolis/Docs/ [retrieved on 2016-04-01]
- AKIHIKO NAKAO 5GMF / THE UNIVERSITY OF TOKYO JAPAN: "Baseline Document: Application of network softwarization to IMT-2020;IMT-O-028", ITU-T DRAFT; STUDY PERIOD 2013-2016; FOCUS GROUP IMT-2020; SERIES IMT-O-028, INTERNATIONAL TELECOMMUNICATION UNION, GENEVA ; CH , vol. imt-2020 25 May 2016 (2016-05-25), pages 1-57, XP044242273, Retrieved from the Internet: URL:https://extranet.itu.int/ITU-T/focusgr oups/imt-2020/FG IMT2020 Output Documents/O-028.docx [retrieved on 2016-05-25]
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 8 June 2016 (2016-06-08), pages 1-179, XP051123271, [retrieved on 2016-06-08]
- ERICSSON: "NETWORK FUNCTIONS VIRTUALIZATION AND SOFTWARE MANAGEMENT", ERICSSON WHITE PAPER, 31 December 2014 (2014-12-31), pages 2-9, XP055303485,

## Description

### TECHNICAL FIELD

Embodiments of this application relate to the communications field, and more specifically, to a method and an apparatus for managing a network slice in the communications field.

### BACKGROUND

With development of communications technologies, a communications network supports more diverse service requirements and scenarios, and the communications network is further abstracted into network slicing (network slicing, NS) based on a logical function. The network slicing is a logical network functional combination that supports a communication service requirement of a particular case. For example, in a 5th Generation (the 5th generation, 5G) network, an enhanced mobile broadband (enhanced mobile broadband, eMBB) network slice, a massive machine type communication (massive machine type communication, mMTC) network slice, an ultra reliable machine type communication (ultra reliable machine type communication, uMTC) network slice, and the like may be customized based on a service requirement.

However, an existing network management solution does not support management of a network slice, and a plurality of network slices in a network are independent and mutually equivalent. Therefore, a network resource of each of the plurality of network slices needs to be independently managed. In management of a network slice, how to implement updating of the network slice is a problem that urgently needs to be resolved.

ZTE in "NextGen Core Architecture solution for sharing Network Function across multiple Network Slices", vol. SA WG2, no. SOPHIA ANTIPOLIS; 20160411 - 20160415, (20160401), describes Network Slicing, in which a Network Slice Controller and a service Orchestrator reconfigure resources requested for a Network Slice. Similar approaches are also described in AKIHIKO NAKAO 5GMF / THE UNIVERSITY OF TOKYO JAPAN, "Baseline Document: Application of network softwarization to IMT-2020;IMT-0-028", vol. imt-2020, (20160525), pages 1 - 57, ITU-T DRAFT; and "3rd Generation Partnership Project; Technical Specification Group Services and System Aspects; Study on Architecture for Next Generation System (Release 14)", 3GPP STANDARD; 3GPP TR 23.799 US 2012/0233302 describes a method for allocating requested network slice resources.

### SUMMARY

According to the present application, the above objects are solved by the claimed matter according to the independent claims. In view of the above, embodiments of this application provide a method and an apparatus for managing a network slice, so that a network slice can be updated based on an actual network status, thereby properly using a network resource.

### BRIEF DESCRIPTION OF DRAWINGS

FIG. 1 is a schematic diagram of a network management architecture to which an embodiment of this application is applied;
FIG. 2 is a schematic diagram of another network management architecture to which an embodiment of this application is applied;
FIG. 3 is a schematic flowchart of a method for managing a network slice according to an embodiment of this application;
FIG. 4 is a schematic flowchart of another method for managing a network slice according to an embodiment of this application;
FIG. 5 is a schematic flowchart of another method for managing a network slice according to an example useful for understanding of this application;
FIG. 6 is a schematic flowchart of another method for managing a network slice according to an embodiment of this application;
FIG. 7 is a schematic flowchart of another method for managing a network slice according to an embodiment of this application;
FIG. 8 is a schematic flowchart of another method for managing a network slice according to an example useful for understanding of this application;
FIG. 9 is a schematic flowchart of another method for managing a network slice according to an embodiment of this application;
FIG. 10 is a schematic block diagram of an apparatus for managing a network slice according to an embodiment of this application;
FIG. 11 is a schematic block diagram of another apparatus for managing a network slice according to an embodiment of this application;
FIG. 12 is a schematic block diagram of another apparatus for managing a network slice according to an embodiment of this application;
FIG. 13 is a schematic block diagram of another apparatus for managing a network slice according to an embodiment of this application;
FIG. 14 is a schematic block diagram of another apparatus for managing a network slice according to an embodiment of this application; and
FIG. 15 is a schematic block diagram of another apparatus for managing a network slice according to an embodiment of this application.

### DESCRIPTION OF EMBODIMENTS

The following describes the technical solutions with reference to the accompanying drawings.

It should be understood that the technical solutions in the embodiments of this application may be applied to various communications systems, such as a Global System for Mobile Communications (Global System for Mobile Communications, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS) system, a Long Term Evolution (Long Term Evolution, LTE) system, an LTE frequency division duplex (Frequency Division Duplex, FDD) system, an LTE time division duplex (Time Division Duplex, TDD) system, a Universal Mobile Telecommunications System (Universal Mobile Telecommunications System, UMTS), a Worldwide Interoperability for Microwave Access (Worldwide Interoperability for Microwave Access, WiMAX) communications system, and a future 5G communications system.

The embodiments of this application relate to a network slicing technology. The network slicing technology is to logically abstract a network into one or more network slices isolated from each other, where each network slice includes a series of logical network functions, to meet diversified requirements of different service types in a targeted manner. For example, in a 5th Generation (the 5th generation, 5G) network, network slicing is an on-demand networking mode, providing an operator with a new service that can be adjusted based on a changing user requirement and that can quickly meet a novel application requirement.

The network slicing technology abstracts a 5G network physical infrastructure resource into a plurality of mutually independent parallel network slices based on a scenario requirement. Customized tailoring of a network function and orchestration and management of the corresponding network function are performed on each network slice based on a requirement of a service scenario and a service model. One network slice may be considered as an instantiated 5G network. Such a network structure allows an operator to provide a network as a service to a user, and can freely combine physical networks based on indicators such as rate, capacity, coverage, latency, reliability, security, and availability, to satisfy different user requirements.

In the network slicing technology, network slice lifecycle management is a key issue that needs to be considered. The network slice lifecycle management includes creation, combination, updating, deletion, and the like of network slices. For creation, combination, and updating of network slices, a network device should determine an available network resource for each network slice, and configure a particular network function and parameter for the network slice. For deletion of a network slice, the network device should release those particular network functions and network resources.

It should be understood that the foregoing network device may be a network management device in a network management system. Specifically, the network device may be a device that includes a network slice lifecycle management NS-LCM module, a device that includes a network slice orchestration NSO module, or a device that includes a network slice control NSC module, or the like described below. This is not limited in this embodiment of this application.

In the network slice lifecycle management, how to implement updating of a network slice is a problem that urgently needs to be resolved. Updating of a network slice includes expanding and diminishing of the network slice. Specifically, when a network slice needs to be expanded based on a service requirement (for example, due to a requirement of service expansion, a machine type communication network slice is expanded from serving 800 terminals previously, to serving 2000 terminals), or when a network needs to diminish a network slice (for example, an original bandwidth requirement of an ultra bandwidth type communication network slice is 1000 M, but now due to a limitation of network resources, only a 500 M bandwidth can be provided for the network slice), the related network slice needs to be diminished.

In this specification, updating of a network slice should be construed as updating of a network resource required by the network slice, including two cases: diminishing or expanding the network slice. A network function of the network slice and a service type of a service provided by the network slice do not change.

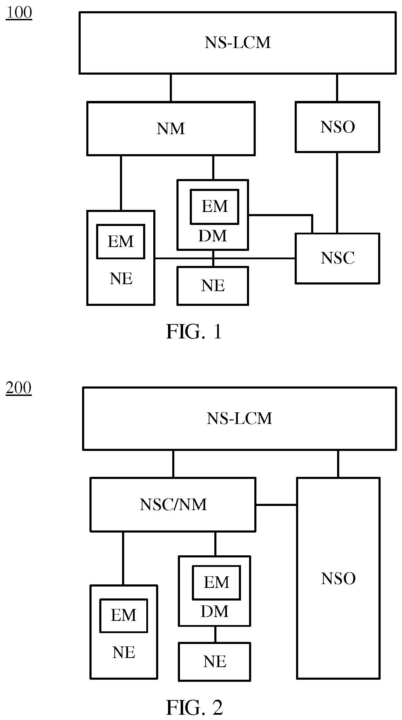

FIG. 1 shows a network management architecture 100 to which an embodiment of this application is applied. The network management architecture 100 may include at least one network element (network element, NE), at least one network element management (element manager, EM) module, at least one domain manager (domain manager, DM), a network slice control (network slicing control, NSC) module, a network slice orchestration (network slice orchestration, NSO) module, a network slice lifecycle management (network slice lifecycle management, NS-LCM) module, and a network management (network manager, NM) module.

The NE module is a minimum unit that can be monitored and managed in the network management architecture 100. The EM module may be responsible for managing a single NE, and provides a function of processing a single NE. For example, the function includes alarm management, notification management, logging, and hardware and software maintenance.

Optionally, it should be understood that, at least some network functions of a network slice may be performed physically by the NE. To be specific, a network slice indicates a series of logical network functions, and an entity that performs a network slicing function may be the NE.

The NM module is responsible for managing an entire network, and may be supported by a plurality of EM modules, or may be directly connected to the NE. The NM may mainly provide a network management function, a function of managing interaction between devices, and other related functions, for example, network resource distribution, configuration, control, and monitoring. For example, the NM may be a module having a function of a network manager in a conventional 3GPP telecommunications network management architecture.

The NS-LCM module is mainly responsible for network slice lifecycle management, for example, including design, creation, deletion, modification, and the like of a network slice. Specifically, at least one of the following functions may be included: (1) receiving an application/service requirement, for example, a quantity of devices that need to be supported/served, a latency and a throughput of a data stream, a coverage range, or an economic parameter (such as a charging manner); (2) converting an application/service requirement into a network requirement, where for example, if a user requirement is a device quantity and a coverage range, a corresponding network requirement is a throughput/latency of a network connection, a quantity of required base stations, or the like; and (3) generating a network slice descriptor (network slice descriptor, NSD), and describing a composition of a network slice, for example, a network slice identifier (network slice identifier, NS-ID), a network function, or a network slice topology (a connection mode, an interface, or a key performance indicator (key performance indicator, KPI) requirement). Specifically, the network function may be a function of a large granularity, for example, a mobility management function, a connection management function, or an access control function, or may be an atomic function, for example, a robust header compression (robust header compression, ROHC) function, an encryption/decryption function, or a reordering function of a Packet Data Convergence Protocol (packet data convergence protocol, PDCP) layer; an automatic repeat request (automatic repeat-reQuest, ARQ) function, a packet fragmentation function, or a reordering function of a Radio Link Control (radio link control, RLC) layer; or a hybrid automatic repeat request (hybrid automatic repeat-reQuest, HARQ) function or a multiplexing/demultiplexing function of a Medium Access Control (medium access control, MAC) layer. The network slice topology may be used to indicate a connection mode, an interface, a KPI requirement (which may include a bandwidth, a latency, or a throughput) and the like between network functions of the network slice.

The NSO module may orchestrate a network resource based on a network slice requirement generated by the NS-LCM module and an actually owned network resource. The network resource may include a link resource, a storage resource, a computing resource, or other network resources described above.

The NSC module may be mainly configured to configure and manage a network resource, to meet a requirement of the network slice.

FIG. 2 shows another network management architecture 200 to which an embodiment of this application is applied. In FIG. 2, an NSC module and an NM module may be combined into one function module. The function module has all functions of the NSC module and the NM module. The combined function module may be an NSC/NM in FIG. 2. The NSC/NM is connected to an NS-LCM module, an NSO module, and each EM module by using an interface. A function of the interface between the NSC/NM and other modules is equivalent to a combination of functions of interfaces separately between the NSC module and other modules and between the NM module and other modules. For the function of the interface, refer to specific descriptions in FIG. 1. Details are not described herein again.

In addition, it should be noted that the function modules and units introduced above are considered from a perspective of the functions of the function modules and units. During actual application, each of the foregoing function modules may be a separate physical entity, or two or more devices may be integrated into one unit. For example, the NS-LCM module and the NSO module may be combined into one function module, and the function module has all functions of the NS-LCM module and the NSO module, or the NM and the NSC may be combined into one function module. A person of ordinary skill in the art can readily conceive of various equivalent modifications or replacements within the technical scope disclosed in this application, and such modifications or replacements should fall within the protection scope of this application.

It should be understood that, a first network device mentioned in this specification may be a device that includes the NSO module (briefly referred to as "NSO" below), a second network device may be a device that includes the NS-LCM module (briefly referred to as "NS-LCM" below), a third network device may be a device that includes the NSC module (briefly referred to as "NSC" below), and a fourth network device may be a device that includes the NM module (briefly referred to as "NM" below). During management and orchestration of a network slice, the first network device, the second network device, the third network device, and the fourth network device may be used to implement respective corresponding functions, thereby flexibly managing the network slice.

It should be understood that, the first network device, the second network device, the third network device, and the fourth network device may be specifically network management devices, configured to monitor, manage, and maintain a network element during network operation and maintenance. However, the embodiments of this application are not limited thereto.

For ease of understanding, the embodiments of this application are described below by using an NSO, an NS-LCM, an NSC, and an NM as execution bodies. However, this is not limited in the embodiments of this application.

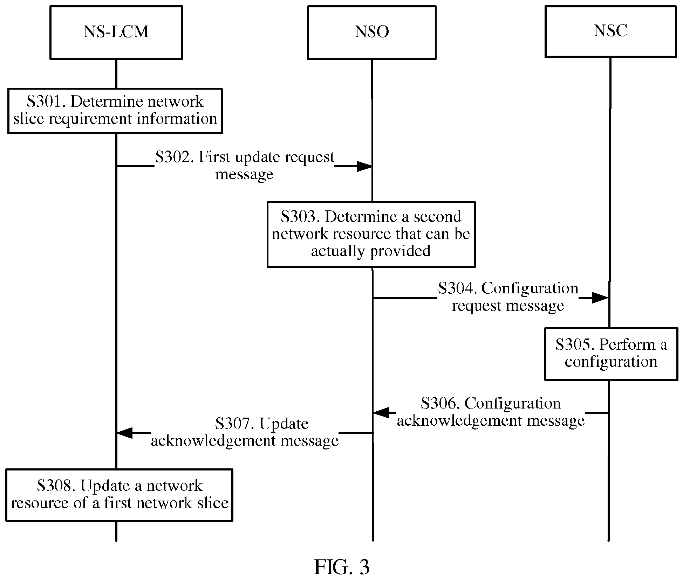

FIG. 3 shows a method 300 for managing a network slice according to an embodiment of this application. The method 300 may be applied to the network management architecture 100 shown in FIG. 1, or may be applied to the network management architecture 200 shown in FIG. 2. This is not limited in this embodiment of this application.

S301. An NS-LCM determines network slice requirement information, where the network slice requirement information is used to indicate that a network resource of a first network slice needs to be updated to a first network resource. The network resource herein may be a link resource, a storage resource, a computing resource, or the like used by the first network slice.

S302. The NS-LCM sends a first update request message to an NSO, where the first update request message carries the network slice requirement information, and the network slice requirement information carries information about the first network resource. The NSO receives the first update request message.

S303. The NSO determines, based on the information that is about the first network resource and that is carried in the first update request message, a second network resource that can be actually provided for the first network slice. Herein, the second network resource may be the same as or different from the first network resource.

S304. The NSO sends a configuration request message to an NSC, where the configuration request message carries information about the second network resource. The NSC receives the configuration request message.

S305. The NSC configures the second network resource based on the configuration request message. Specifically, the NSC may configure an association relationship between a network function of the first network slice and the second network resource.

S306. The NSC sends a configuration acknowledgement message to the NSO, and the NSO receives the configuration acknowledgement message.

S307. The NSO sends an update acknowledgement message to the NS-LCM, and the NS-LCM receives the update acknowledgement message.

S308. The NS-LCM updates the network resource of the first network slice, to be specific, updates the network resource of the first slice to the second network resource.

It should be understood that in the foregoing procedure, the first network resource is a network resource required by the first network slice, and the second network resource is a network resource that can be provided for the first network slice based on an actual network status. In this embodiment of this application, the first network resource may be the same as or different from the second network resource. If the first network resource is different from the second network resource, the second network resource is included in the first network resource. For example, if the network slice requirement information indicates that the first network slice needs to update a network bandwidth to an 800 M bandwidth, the 800 M bandwidth is the first network resource. If the NSO can actually provide an 800 M bandwidth for the first network slice based on an actual network status, the second network resource is the 800 M bandwidth, and the second network resource is the same as the first network resource. If the NSO determines that the network can actually provide only a 600 M bandwidth for the first network slice, the second network resource is the 600 M bandwidth.

Therefore, for a case of requesting to diminish the network slice, network resources are sufficient, and the first network resource is the same as the second network resource. For a case of requesting to expanding the network slice, it needs to be determined whether there is an available network resource, and a network resource is allocated to the first network slice based on an actual case. In this case, the first network resource may be the same as or different from the second network resource.

In addition, the network slice requirement information may carry only some information that changes compared with an original network resource of the first network slice, or may carry all network resources required by the first network slice. This is not limited in this embodiment of this application.

Specifically, in S301, the network slice requirement information may include an identifier of the first network slice and the first network resource required by the first network slice, or may further include a new network slice descriptor generated by the first network slice. This is not limited in this embodiment of this application. In addition, the NS-LCM may determine the network slice requirement information in a plurality of manners. This is also not limited in this embodiment of this application.

In an optional embodiment, S301 of determining, by an NS-LCM, network slice requirement information includes: receiving, by the NS-LCM, a second update request message, where the second update request message carries service requirement information of a user; and determining, by the NS-LCM, the network slice requirement information based on the service requirement information.

In an optional embodiment, S301 of determining, by an NS-LCM, network slice requirement information includes: receiving, by the NS-LCM, a third update request message sent by the NSC, where the third update request message carries the network slice requirement information; and determining, by the NS-LCM, the network slice requirement information based on the third update request message.

Specifically, in S303, the NSO may determine, in a plurality of manners, the second network resource that can be actually provided for the first network slice. This is not limited in this embodiment of this application.

In an optional embodiment, S303 of determining, by the NSO based on the first update request message, a second network resource that can be actually provided for the first network slice includes: determining, by the NSO, the first network resource as the second network resource when the first network resource is included in a third network resource currently occupied by the first network slice.

In an optional embodiment, S303 of determining, by the NSO based on the first update request message, a second network resource that can be actually provided for the first network slice includes: sending, by the NSO, a reservation request message to the NSC when a third network resource currently occupied by the first network slice is included in the first network resource and it is determined that there is no available network resource, where the reservation request message carries information about the first network resource; receiving, by the NSO, a reservation acknowledgement message sent by the NSC based on the reservation request message, where the reservation acknowledgement message carries information about the second network resource; and determining, by the NSO, the second network resource based on the reservation acknowledgement message.

Herein, the third network resource is an original network resource of the first network slice, and the NSO may compare the requested first network resource with the original third network resource, to determine whether to request to diminish or expand the first network slice. For a case of requesting to diminish the first network slice, the first network resource is directly determined as the second network resource. For a case of requesting to expand the first network slice, the NSO may send the reservation request message to the NSC, and after reserving a resource, the NSC allocates, to the first network slice based on an actual case, the second network resource that can be actually provided.

In an optional embodiment, S303 of determining, by the NSO based on the first update request message, a second network resource that can be actually provided for the first network slice includes: determining, by the NSO, the second network resource based on a plurality of update request messages, where the plurality of update request messages are used to request to update network resources of a plurality of network slices, the plurality of update request messages include the first update request message, and the plurality of network slices include the first network slice.

In this embodiment, the NSO may receive the plurality of update request messages at a same time, for updating the network resources of the plurality of network slices. In this case, the NSO needs to orchestrate available network resources, to meet requirements of the plurality of network slices as much as possible. The orchestration herein specifically refers to determining, for each network slice, a network resource that can be actually provided. For example, the NSO receives three update request messages for requesting to provide a 100 M bandwidth for the first network slice, to provide a 200 M bandwidth for a second network slice, and to provide a 150 M bandwidth for a third network slice, and the NSO determines that an available network resource is 300 M. In this case, the NSO may meet requirements of the first network slice and the second network slice (that is, orchestrate a 100 M bandwidth for the first network slice and a 200 M bandwidth for the second network slice), or meet requirements of the first network slice and the third network slice (that is, orchestrate a 100 M bandwidth for the first network slice and a 150 M bandwidth for the third network slice), or any other combination may be used. This is not limited in this embodiment of this application.

In an optional embodiment, before S304 of sending, by the NSO, a configuration request message to an NSC, the method further includes: sending, by the NSO, a resource acknowledgement message to the NS-LCM, where the resource acknowledgement message carries the information about the second network resource; receiving, by the NS-LCM, the resource acknowledgement message sent by the NSO, and sending, by the NS-LCM, a resource accept message to the NSO if the NS-LCM determines to accept updating of the network resource of the first network slice to the second network resource, where the resource accept message is used to indicate that updating of the network resource of the first network slice to the second network resource is accepted; and receiving, by the NSO, the resource accept message sent by the NS-LCM based on the resource acknowledgement message, where the resource accept message is used to indicate that updating of the network resource of the first network slice to the second network resource is accepted.

Specifically, after the NSO determines the second network resource provided for the first network slice, if the second network resource is different from the first network resource requested by the NS-LCM, the NSO may first send the resource acknowledgement message to the NS-LCM, to determine whether the NS-LCM accepts the second network resource, and then configure the second network resource if the NS-LCM accepts the second network resource. This can avoid a case in which the NS-LCM does not accept the network resource allocated by the NSO to the NS-LCM after the network resource is configured.

It should be understood that the resource acknowledgement message may carry only a network resource different from that in the network slice requirement information, or may carry all network resources reallocated to the first network slice. This is not limited in this embodiment of this application.

In an optional embodiment, after S308 of updating, by the NS-LCM, the network resource of the first network slice based on the update acknowledgement message, the method further includes: sending, by the NS-LCM, information about the first network slice to an NM, where the information includes the information about the second network resource.

The NM herein may be construed as a device with a network management function. The NM may perform corresponding backup based on the received information about the updated first network slice, thereby facilitating network management.

In an optional embodiment, after the sending, by the NSC, a reservation acknowledgement message to the NSO, the method further includes: updating, by the NSC, information about the first network slice, where the information includes the information about the second network resource.

When the NSC has the function of the foregoing NM, the NSC may directly update the stored information about the first network slice, thereby implementing network management.

It should be understood that the NSC and the NM may be a same device or may be different devices. This is not limited in this embodiment of this application.

In this embodiment of this application, the NSO receives the update request message sent by the NS-LCM, and determines, based on the network slice requirement information carried in the update request message and based on the actual network status, the network resource that can be actually provided for the requested first network slice. After the NSO orchestrates the network resource that can be actually provided, and after configuring, by using the NSC, the network resource that can be actually provided, the NSO sends the update acknowledgement message to the NS-LCM. The NS-LCM updates the network resource of the first network slice based on the update acknowledgement message. To be specific, the NS-LCM updates the network resource of the first network slice to the foregoing network resource that can be actually provided. In this way, a network slice can be updated based on the actual network status, thereby properly using the network resource.

It should be understood that, sequence numbers of the foregoing processes do not indicate an execution sequence, and an execution sequence of processes shall be determined based on functions and internal logic thereof, and shall constitute no limitation on an implementation process of the embodiments of this application.

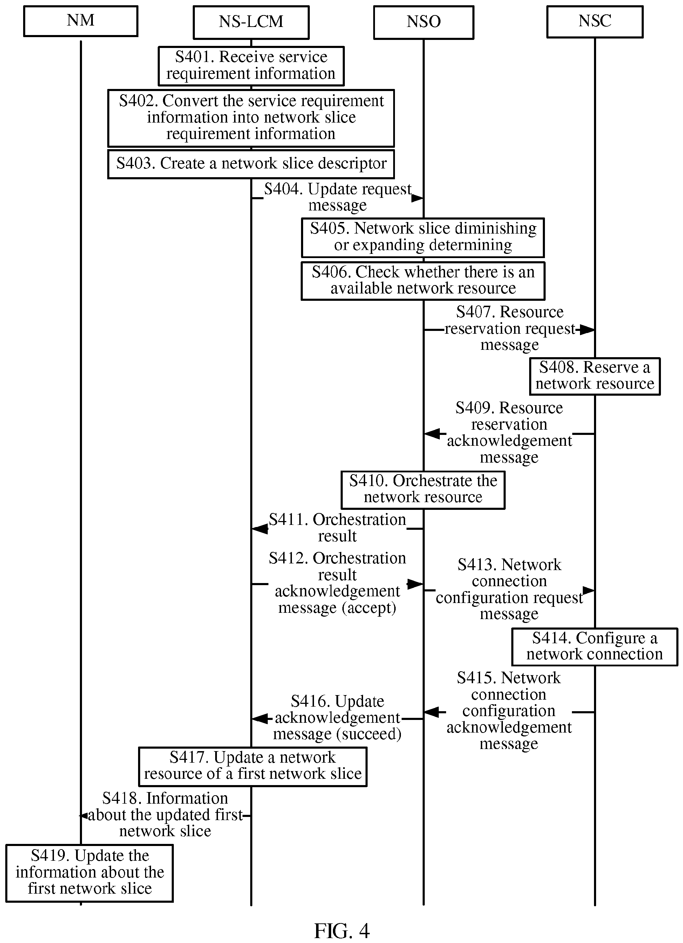

FIG. 4 shows another method 400 for managing a network slice according to an embodiment of this application. The method 400 may be applied to the network management architecture 100 shown in FIG. 1, but this embodiment of this application is not limited thereto.

In S401, an NS-LCM receives service requirement information sent by a user or an operator, where the service requirement information may be a quantity of devices that need to be served by the service, a coverage range, or the like.

Specifically, for example, the NS-LCM may include a user-oriented upper layer application interface. The NS-LCM may receive service request information of a computer application program of the user by using the upper layer application interface. The service request message may be a service termination request. For example, the upper layer application interface may be an application programming interface (Application Programming Interface, API), and the foregoing user may be a terminal device.

In S402, the NS-LCM determines, based on the service requirement information, a first network slice corresponding to the service, and converts the service requirement information into network slice requirement information, where the network slice requirement information is used to indicate a first network resource required by the first network slice, for example, a quantity of required base stations, or a quantity of base stations that need to be increased or reduced.

In S403, the NS-LCM creates a new network slice descriptor NSD based on the network slice requirement information, to update a component element of the first network slice, where the new network slice descriptor includes an identifier of the first network slice and information about the first network resource.

In S404, the NS-LCM sends an update request message to an NSO, where the update request message carries the foregoing new network slice descriptor. The NSO receives the update request message.

In S405, the NSO compares the new network slice descriptor carried in the update request message with an original network slice descriptor of the first network slice, to determine whether to diminish or expand the first network slice.

Specifically, for example, due to a requirement of service expansion, the first network slice is requested to be expanded from serving 800 terminals previously, to serving 2000 terminals. Therefore, the first network slice needs to be expanded. Alternatively, an original bandwidth requirement of the first network slice is 1000 M, but now due to a limitation of network resources, only a 500 M bandwidth can be provided for the first network slice. In this case, the first network slice needs to be diminished. Because there are many types of network resources, this embodiment of this application is not limited thereto.

If the NSO determines that the first network slice needs to be expanded, S406 is performed. If the NSO determines that the first network slice needs to be diminished, S410 and S413 to S419 are directly performed.

In S406, the NSO checks whether there is an available network resource, and if there is no available network resource, S407 to S419 are performed; or if there is an available network resource, S410 and S413 to S419 are directly performed.

In S407, the NSO sends a resource reservation request message to an NSC, where the resource reservation request message carries the information about the first network resource requested by the NS-LCM. The network resource may include a link resource, a storage resource, a computing resource, or the like. The NSC receives the resource reservation request message.

In S408, the NSC reserves a second network resource for the first network slice based on an actual network status.

In S409, the NSC sends a resource reservation acknowledgement message to the NSO, where the resource reservation acknowledgement message carries the second network resource that can be actually provided for the first network slice. The NSO receives the resource reservation acknowledgement message.

In S410, the NSO determines, based on the resource reservation acknowledgement message, the second network resource that can be actually provided for the first network slice, and orchestrates the second network resource.

In S411, the NSO sends, to the NS-LCM, an orchestration result for the second network resource, where the orchestration result may include a parameter that is inconsistent with the new network slice descriptor. The NS-LCM receives the orchestration result.

It should be understood that, when the second network resource that can be actually provided for the first network slice is inconsistent with the first network resource requested in the service requirement information, the NSO provides, for the first network slice, the second network resource that can be actually provided. In this case, the NS-LCM needs to determine whether to accept the orchestration result.

In S412, the NS-LCM determines to receive the orchestration result, and sends an orchestration result acknowledgement message to the NSO, where the orchestration result acknowledgement message is used to acknowledge acceptance of the orchestration result. The NSO receives the orchestration result acknowledgement message.

Optionally, the orchestration result acknowledgement message may be 0 or 1, and it is agreed upon by the NSO and the NS-LCM in advance that 0 indicates that the orchestration result is not accepted and 1 indicates that the orchestration result is accepted. The orchestration result acknowledgement message may alternatively be 00 or 11, or other information. This is not limited in this embodiment of this application.

In S413, if the NSO determines, based on the orchestration result acknowledgement message, that the NS-LCM accepts the orchestration result, the NSO sends a network connection configuration request message to the NSC, to request to configure a network connection of the first network slice. The NSC receives the network connection configuration request message.

In S414, the NSC configures the network connection of the first network slice.

In S415, the NSC sends a network connection configuration acknowledgement message to the NSO, to notify the NSO that the network connection has been configured. The NSO receives the network connection configuration acknowledgement message.

In S416, the NSO sends an update acknowledgement message to the NS-LCM, where the update acknowledgement message is used to acknowledge successful configurations of a network resource and the network connection of the first network slice. The NS-LCM receives the update acknowledgement message.

Optionally, the update acknowledgement message may be 0 or 1, and it is agreed upon by the NSO and the NS-LCM in advance that 0 indicates that the updating of the network resource fails and 1 indicates that the network resource is successfully updated. The update acknowledgement message may alternatively be 00 or 11, or other information. This is not limited in this embodiment of this application.

In S417, the NS-LCM updates the network resource of the first network slice.

In S418, after updating the network resource of the first network slice, the NS-LCM sends information about the updated first network slice to an NM. The NM receives the information about the updated first network slice.

In S419, the NM centrally performs backup and management based on the information about the first network slice.

In the method for managing a network slice in this embodiment of this application, the NSO determines the second network resource that can be actually provided for the first network slice and orchestrates the second network resource. If the second network resource is inconsistent with the first network resource requested by the NS-LCM, the NSO first sends the orchestration result to the NS-LCM, and determines whether the NS-LCM accepts the orchestration result. If the NS-LCM accepts the orchestration result, the NSO configures, by using the NSC, the corresponding network resource. In this way, a network slice can be updated based on the actual network status, thereby properly using the network resource.

It should be understood that, sequence numbers of the foregoing processes do not indicate an execution sequence, and an execution sequence of processes shall be determined based on functions and internal logic thereof, and shall constitute no limitation on an implementation process of the embodiments of this application.

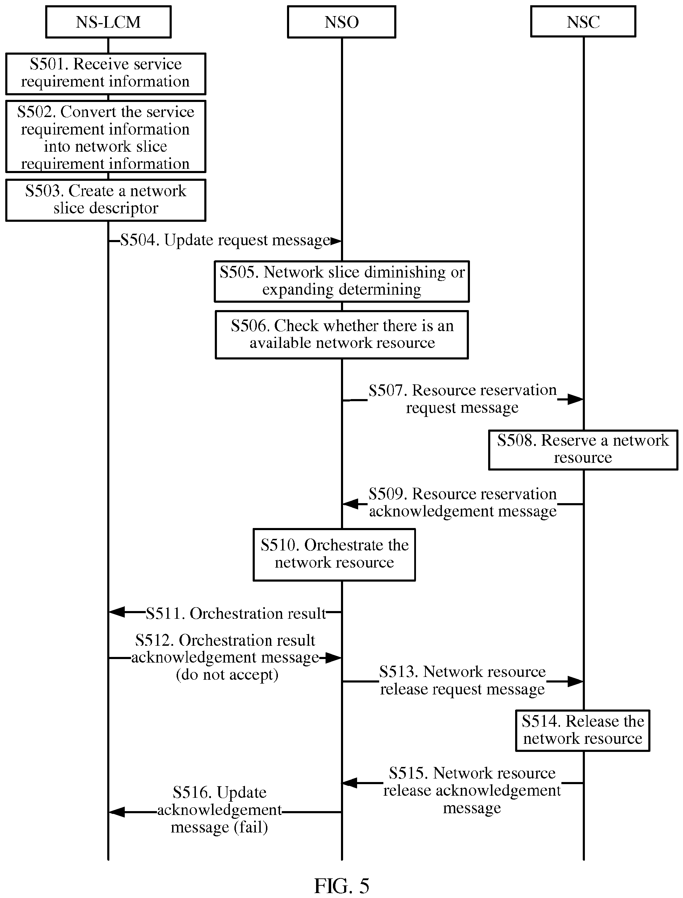

FIG. 5 shows another method 500 for managing a network slice according to an example useful for understanding of this application. The method 500 may be applied to the network management architecture 100 shown in FIG. 1, or may be applied to the network management architecture 200 shown in FIG. 2, but this example of this application is not limited thereto.

This example of this application describes a case in which the second network resource that can be actually provided for the first network slice is inconsistent with the first network resource requested in the service requirement information. In this example of this application, S501 to S511 are the same as S401 to S411 in FIG. 4, and details are not described herein again.

In S512, after receiving the orchestration result sent by the NSO, the NS-LCM does not accept the orchestration result, and sends an orchestration result acknowledgement message to the NSO, where the orchestration result acknowledgement message indicates that the NSO does not accept the orchestration result. The NSO receives the orchestration result acknowledgement message.

In S513, after determining that the NS-LCM does not accept the orchestration result, the NSO sends a network resource release request message to the NSC, to request the NSC to release a reserved network resource. The NSC receives the network resource release request message.

In S514, the NSC releases a previously reserved network resource based on the network resource release request message.

In S515, the NSC sends a network resource release acknowledgement message to the NSO. The NSO receives the network resource release acknowledgement message.

In S516, the NSO acknowledges that the network resource has been released, and sends an update acknowledgement message to the NS-LCM, where the update acknowledgement message is used to indicate that updating of the network resource of the first network slice fails.

In the method for managing a network slice in this example of this application, the NSO determines the second network resource that can be actually provided for the first network slice and orchestrates the second network resource. If the second network resource is inconsistent with the first network resource requested by the NS-LCM, the NSO first sends the orchestration result to the NS-LCM, and determines whether the NS-LCM accepts the orchestration result. If the NS-LCM does not accept the orchestration result, the NSC directly performs a configuration to release the reserved network resource, to notify the NS-LCM that the network resource update fails. This can avoid a case in which the NS-LCM does not accept an orchestration result after a new network resource has been configured, thereby avoiding waste of resources and signaling.

It should be understood that this example of this application is also applicable to two application scenarios in which the NSC and the NM are two independent devices and in which the NSC and the NM are a same device.

It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

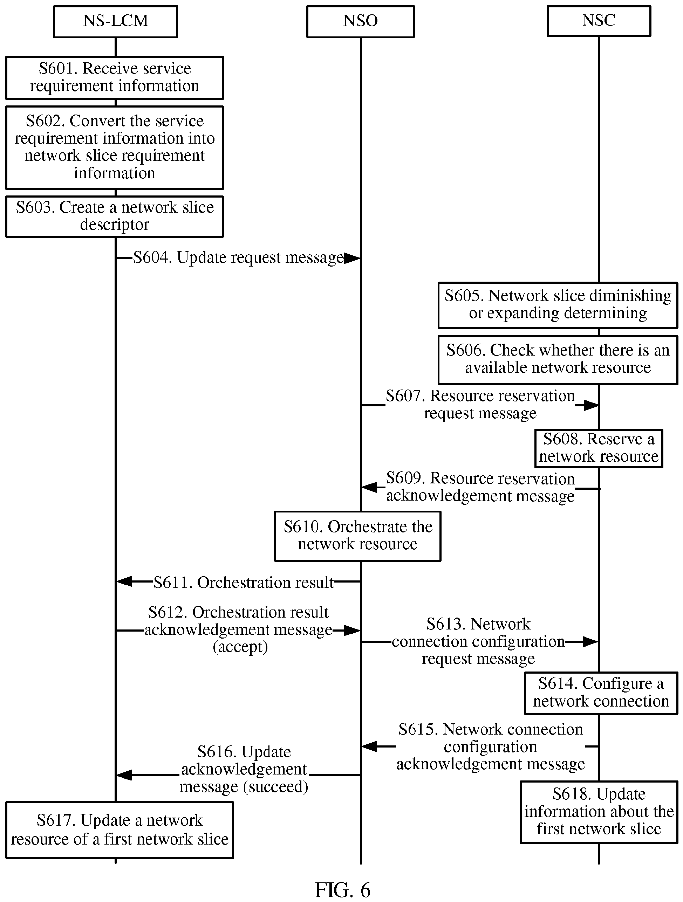

FIG. 6 shows another method 600 for managing a network slice according to an embodiment of this application. The method 600 may be applied to the network management architecture 200 shown in FIG. 2, but this embodiment of this application is not limited thereto.

In this embodiment of this application, an NSC has a related function of an NM. S601 to S617 are the same as S401 to S417 in FIG. 4, and details are not described herein again.

S618. The NSC updates information about the first network slice and is configured to back up and manage the information about the first network slice.

It should be understood that S618 does not need to be performed after S617 ends, and S618 can be triggered as long as being after S615.

It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

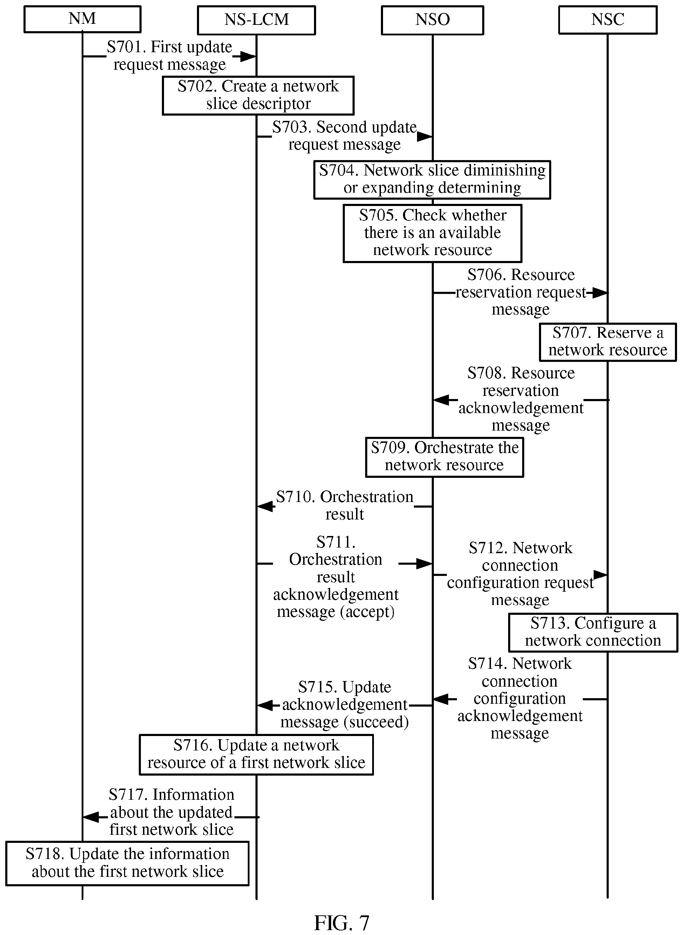

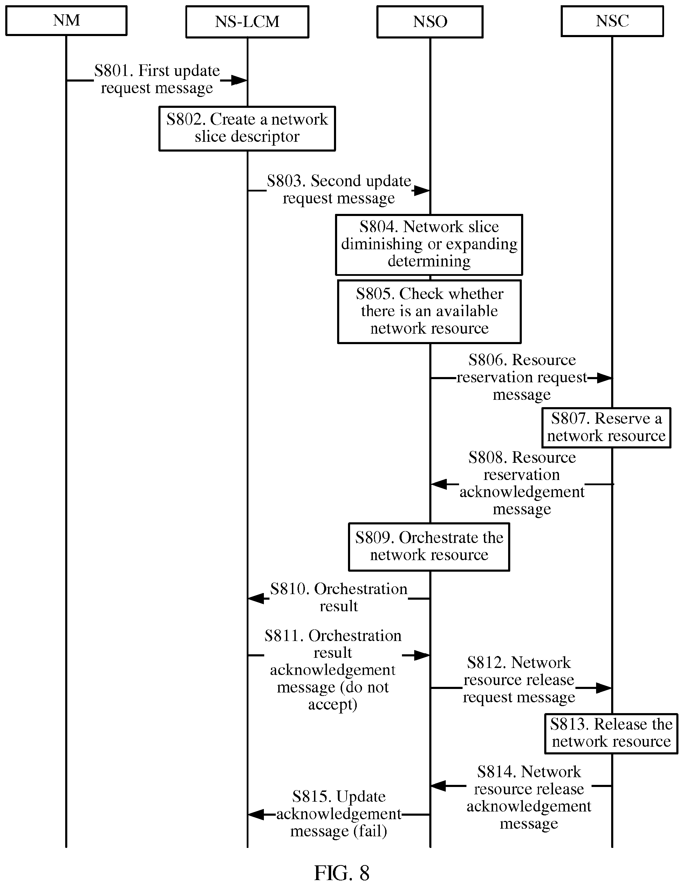

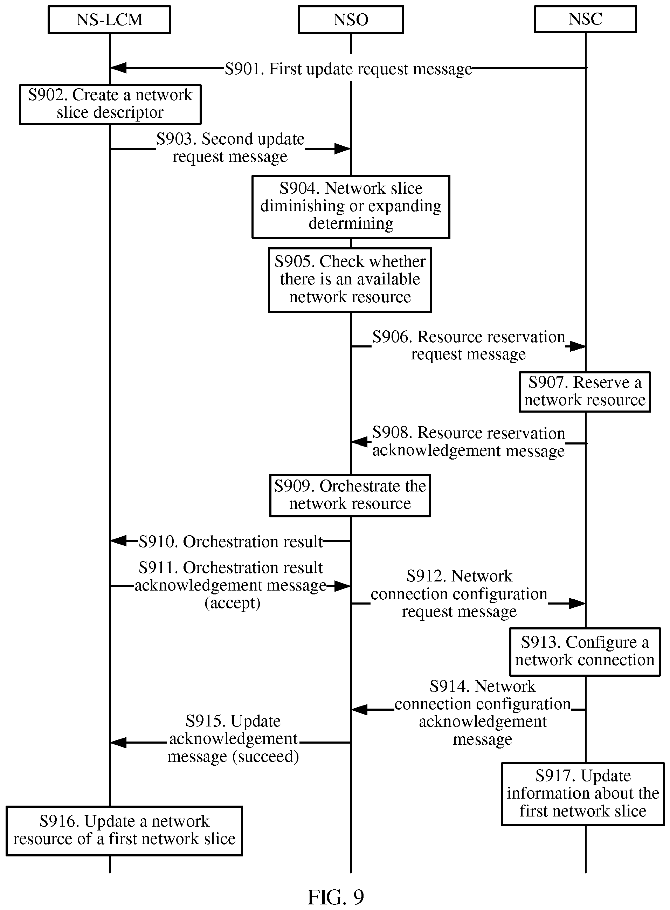

A network slice update is initiated by the NS-LCM in each of FIG. 4, FIG. 5, and FIG. 6. In addition, the network slice update may further be initiated by the NM, as shown in FIG. 7 and FIG. 8. When the NSC has the function of the NM, the network slice update may further be initiated by the NSC, as shown in FIG. 9. Detailed descriptions are provided below with reference to FIG. 7, FIG. 8, and FIG. 9 respectively.

FIG. 7 shows another method 700 for managing a network slice according to an embodiment of this application. The method 700 may be applied to the network management architecture 100 shown in FIG. 1, but this embodiment of this application is not limited thereto.

In S701, an NS-LCM receives a first update request message sent by an NM, where the first update request message carries an identifier of a first network slice and information about a first network resource that needs to be provided for the first network slice.

In S702, the NS-LCM creates a new network slice descriptor based on the first update request message, to update a component element of the first network slice, where the new network slice descriptor includes the identifier of the first network slice and the information about the first network resource.

In S703, the NS-LCM sends a second update request message to an NSO, where the second update request message carries the new network slice descriptor. The NSO receives the second update request message.

S704 to S718 are the same as S405 to S419 in FIG. 4, and details are not described herein again.

It should be understood that, sequence numbers of the foregoing processes do not indicate an execution sequence, and an execution sequence of processes shall be determined based on functions and internal logic thereof, and shall constitute no limitation on an implementation process of the embodiments of this application.

FIG. 8 shows another method 800 for managing a network slice according to an example usefule for understanding of this application. The method 800 may be applied to the network management architecture 100 shown in FIG. 1, but this example of this application is not limited thereto.

This example of this application describes a case in which the second network resource that can be actually provided for the first network slice is inconsistent with the first network resource requested in the service requirement information. In this example of this application, S801 to S803 are the same as S701 to S703 in FIG. 7, and S804 to S815 are the same as S505 to S516 in FIG. 5. Therefore, details are not described herein again.

It should be understood that, sequence numbers of the foregoing processes do not indicate an execution sequence, and an execution sequence of processes shall be determined based on functions and internal logic thereof, and shall constitute no limitation on an implementation process of the embodiments of this application.

FIG. 9 shows another method 900 for managing a network slice according to an embodiment of this application. The method 900 may be applied to the network management architecture 200 shown in FIG. 2, but this embodiment of this application is not limited thereto.

In S901, an NSC sends a first update request message to an NS-LCM, where the first update request message carries an identifier of a first network slice and information about a first network resource that needs to be provided for the first network slice. The NS-LCM receives the first update request message.

S902 to S916 are the same as S702 to S716, and details are not described herein again.

S917. The NSC updates information about the first network slice and is configured to back up and manage the information about the first network slice.

It should be understood that FIG. 9 shows only an embodiment in which the NS-LCM accepts an orchestration result of an actually provided second network resource when the NSC initiates updating of a network slice and a requested first network resource is inconsistent with the actually provided second network resource. An embodiment in which the NS-LCM does not accept an orchestration result of an actually provided second network resource when the NSC initiates updating of a network slice and a requested first network resource is inconsistent with the actually provided second network resource, that is, an embodiment of unsuccessful updating, is similar to FIG. 5 and FIG. 8. Details are not described herein again.

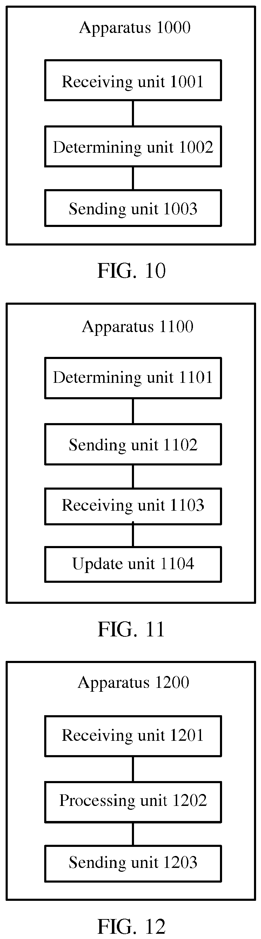

The methods for managing a network slice according to the embodiments of this application are described in detail with reference to FIG. 1 to FIG. 9 above. Apparatuses for managing a network slice according to the embodiments of this application are described in detail with reference to FIG. 10 to FIG. 15 below.

FIG. 10 shows an apparatus 1000 for managing a network slice according to an embodiment of this application. The apparatus 1000 includes:
a receiving unit 1001, configured to receive a first update request message sent by a second network device, where the first update request message carries network slice requirement information, and the network slice requirement information is used to indicate that a network resource of a first network slice needs to be updated to a first network resource; a determining unit 1002, configured to determine, based on the first update request message received by the transceiver, a second network resource that can be actually provided for the first network slice; and a sending unit 1003, configured to send an update acknowledgement message to the second network device, where the update acknowledgement message is used to instruct to update the network resource of the first network slice based on the second network resource.

Optionally, the determining unit 1002 is specifically configured to determine the first network resource as the second network resource when the first network resource is included in a third network resource currently occupied by the first network slice.

Optionally, the sending unit 1003 is specifically configured to send a reservation request message to a third network device when a third network resource currently occupied by the first network slice is included in the first network resource and it is determined that there is no available network resource, where the reservation request message carries information about the first network resource. The receiving unit 1001 is further configured to receive a reservation acknowledgement message sent by the third network device based on the reservation request message, where the reservation acknowledgement message carries information about the second network resource. The determining unit 1002 is specifically configured to determine the second network resource based on the reservation acknowledgement message.

Optionally, the determining unit 1002 is specifically configured to determine the second network resource based on a plurality of update request messages, where the plurality of update request messages are used to request to update network resources of a plurality of network slices, the plurality of update request messages include the first update request message, and the plurality of network slices include the first network slice.

Optionally, the sending unit 1003 is further configured to: before sending the update acknowledgement message to the second network device, send a configuration request message to the third network device, where the configuration request message is used to request to configure the second network resource. The receiving unit 1001 is further configured to receive a configuration acknowledgement message sent by the third network device based on the configuration request message.

Optionally, the sending unit 1003 is further configured to: before sending the configuration request message to the third network device, send a resource acknowledgement message to the second network device, where the resource acknowledgement message carries the information about the second network resource. The receiving unit 1001 is further configured to receive a resource accept message sent by the second network device based on the resource acknowledgement message, where the resource accept message is used to indicate that updating of the network resource of the first network slice to the second network resource is accepted.

It should be understood that the apparatus 1000 herein is represented in a form of a functional unit. The term "unit" herein may refer to an application-specific integrated circuit (Application Specific Integrated Circuit, ASIC), an electronic circuit, a processor (for example, a shared processor, a proprietary processor, or a packet processor) for performing one or more software or firmware programs and a memory, a combined logic circuit, and/or another appropriate component supporting the described function. In an optional example, a person skilled in the art may understand that the apparatus 1000 may be specifically the first network device in the foregoing embodiments. The apparatus 1000 may be configured to perform procedures and/or steps corresponding to the first network device in the foregoing method embodiments. To avoid repetition, details are not described herein again.

FIG. 11 shows another apparatus 1100 for managing a network slice according to an embodiment of this application. The apparatus 1100 includes:
a determining unit 1101, configured to determine network slice requirement information, where the network slice requirement information is used to indicate that a network resource of a first network slice needs to be updated to a first network resource; a sending unit 1102, configured to send a first update request message to a first network device based on the network slice requirement information determined by the processor, where the first update request message carries the network slice requirement information; a receiving unit 1103, configured to receive an update acknowledgement message sent by the first network device based on the first update request message, where the update acknowledgement message is used to instruct to update the network resource of the first network slice based on the second network resource; and an update unit 1104, configured to update the network resource of the first network slice to the second network resource based on the update acknowledgement message.

Optionally, the receiving unit 1103 is further configured to receive a second update request message, where the second update request message carries service requirement information of a user. The determining unit 1101 is specifically configured to determine the network slice requirement information based on the service requirement information.

Optionally, the receiving unit 1103 is further configured to receive a third update request message sent by a third network device, where the third update request message carries the network slice requirement information. The determining unit 1101 is specifically configured to determine the network slice requirement information based on the third update request message.

Optionally, the receiving unit 1103 is further configured to: after the first update request message is sent to the first network device and before the network resource of the first network slice is updated to the second network resource based on the update acknowledgement message, receive a resource acknowledgement message sent by the first network device, where the resource acknowledgement message carries information about the second network resource. The sending unit 1102 is further configured to send a resource accept message to the first network device when it is determined to accept updating of the network resource of the first network slice to the second network resource, where the resource accept message is used to indicate that updating of the network resource of the first network slice to the second network resource is accepted.

Optionally, the sending unit 1102 is further configured to: after the network resource of the first network slice is updated based on the update acknowledgement message, send information about the first network slice to a fourth network device, where the information includes the information about the second network resource.

It should be understood that the apparatus 1100 herein is represented in a form of a functional unit. The term "unit" herein may refer to an application-specific integrated circuit (Application Specific Integrated Circuit, ASIC), an electronic circuit, a processor (for example, a shared processor, a proprietary processor, or a packet processor) for performing one or more software or firmware programs and a memory, a combined logic circuit, and/or another appropriate component supporting the described function. In an optional example, a person skilled in the art may understand that the apparatus 1100 may be specifically the second network device in the foregoing embodiments. The apparatus 1100 may be configured to perform procedures and/or steps corresponding to the second network device in the foregoing method embodiments. To avoid repetition, details are not described herein again.

FIG. 12 shows another apparatus 1200 for managing a network slice according to an embodiment of this application. The apparatus 1200 includes:
a receiving unit 1201, configured to receive a reservation request message sent by a first network device, where the reservation request message carries information about a first network resource required by a first network slice; a processing unit 1202, configured to reserve a second network resource based on the reservation request message received by the transceiver; and a sending unit 1203, configured to send a reservation acknowledgement message to the first network device, where the reservation acknowledgement message carries information about the second network resource and is used to update a network resource of the first network slice to the second network resource.

Optionally, the receiving unit 1201 is further configured to: after the reservation acknowledgement message is sent to the first network device, receive a configuration request message sent by the first network device, where the configuration request message carries the information about the second network resource. The processing unit 1202 is further configured to configure an association relationship between a network function of the first network slice and the second network resource based on the configuration request message. The transceiver is further configured to send a configuration acknowledgement message to the first network device.

Optionally, the receiving unit 1201 is further configured to: after the reservation acknowledgement message is sent to the first network device, receive a release request message sent by the first network device, where the release request message is used to request to release the second network resource. The processing unit 1202 is further configured to release the second network resource based on the release request message. The sending unit 1203 is further configured to send a release acknowledgement message to the first network device.

Optionally, the processing unit 1202 is further configured to: after the reservation acknowledgement message is sent to the first network device, update information about the first network slice, where the information includes the information about the second network resource.

It should be understood that the apparatus 1200 herein is represented in a form of a functional unit. The term "unit" herein may refer to an application-specific integrated circuit (Application Specific Integrated Circuit, ASIC), an electronic circuit, a processor (for example, a shared processor, a proprietary processor, or a packet processor) for performing one or more software or firmware programs and a memory, a combined logic circuit, and/or another appropriate component supporting the described function. In an optional example, a person skilled in the art may understand that the apparatus 1200 may be specifically the third network device in the foregoing embodiments. The apparatus 1200 may be configured to perform procedures and/or steps corresponding to the third network device in the foregoing method embodiments. To avoid repetition, details are not described herein again.

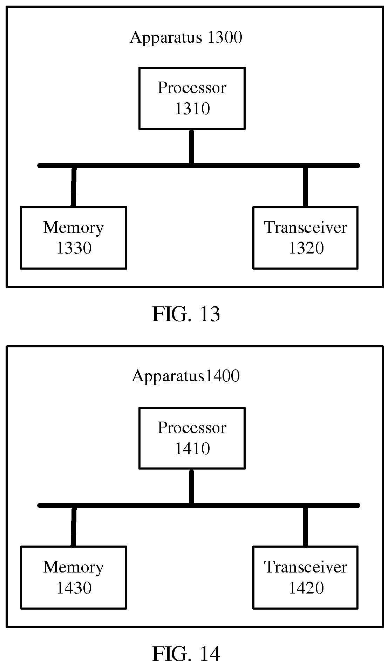

FIG. 13 shows another apparatus 1300 for managing a network slice according to an embodiment of this application. The apparatus 1300 includes a processor 1310, a transceiver 1320, a memory 1330, and a bus system 1340. The processor 1310, the transceiver 1320, and the memory 1330 are connected to each other by using the bus system 1340. The memory 1330 is configured to store an instruction. The processor 1310 is configured to execute the instruction stored in the memory 1330, to control the transceiver 1320 to send a signal and/or receive a signal.

The transceiver 1320 is configured to receive a first update request message sent by a second network device, where the first update request message carries network slice requirement information, and the network slice requirement information is used to indicate that a network resource of a first network slice needs to be updated to a first network resource. The processor 1310 is configured to determine, based on the first update request message received by the transceiver, a second network resource that can be actually provided for the first network slice. The transceiver 1320 is configured to send an update acknowledgement message to the second network device, where the update acknowledgement message is used to instruct to update the network resource of the first network slice based on the second network resource.

Optionally, the processor 1310 is specifically configured to determine the first network resource as the second network resource when the first network resource is included in a third network resource currently occupied by the first network slice.

Optionally, the transceiver 1320 is specifically configured to send a reservation request message to a third network device when a third network resource currently occupied by the first network slice is included in the first network resource and it is determined that there is no available network resource, where the reservation request message carries information about the first network resource. The transceiver 1320 is further configured to receive a reservation acknowledgement message sent by the third network device based on the reservation request message, where the reservation acknowledgement message carries information about the second network resource. The processor 1310 is specifically configured to determine the second network resource based on the reservation acknowledgement message.

Optionally, the processor 1310 is specifically configured to determine the second network resource based on a plurality of update request messages, where the plurality of update request messages are used to request to update network resources of a plurality of network slices, the plurality of update request messages include the first update request message, and the plurality of network slices include the first network slice.

Optionally, the transceiver 1320 is further configured to: before sending the update acknowledgement message to the second network device, send a configuration request message to the third network device, where the configuration request message is used to request to configure the second network resource. The transceiver 1320 is further configured to receive a configuration acknowledgement message sent by the third network device based on the configuration request message.

Optionally, the transceiver 1320 is further configured to: before sending the configuration request message to the third network device, send a resource acknowledgement message to the second network device, where the resource acknowledgement message carries the information about the second network resource. The transceiver 1320 is further configured to receive a resource accept message sent by the second network device based on the resource acknowledgement message, where the resource accept message is used to indicate that updating of the network resource of the first network slice to the second network resource is accepted.

It should be understood that the apparatus 1300 may be specifically the first network device in the foregoing embodiments, and may be configured to perform steps and/or procedures corresponding to the first network device in the foregoing method embodiments. Optionally, the memory 1330 may include a read-only memory and a random access memory, and provide an instruction and data to the processor. Apart of the memory may further include a non-volatile random access memory. For example, the memory may further store device type information. The processor 1310 may be configured to execute the instruction stored in the memory, and when the processor 1310 executes the instruction stored in the memory, the processor 1310 is configured to perform steps and/or procedures in the method embodiments corresponding to the first network device.

FIG. 14 shows another apparatus 1400 for managing a network slice according to an embodiment of this application. The apparatus 1400 includes a processor 1410, a transceiver 1420, a memory 1430, and a bus system 1440. The processor 1410, the transceiver 1420, and the memory 1430 are connected to each other by using the bus system 1440. The memory 1430 is configured to store an instruction. The processor 1410 is configured to execute the instruction stored in the memory 1430, to control the transceiver 1420 to send a signal and/or receive a signal.

The processor 1410 is configured to determine network slice requirement information, where the network slice requirement information is used to indicate that a network resource of a first network slice needs to be updated to a first network resource. The transceiver 1420 is configured to send a first update request message to a first network device based on the network slice requirement information determined by the processor, where the first update request message carries the network slice requirement information. The transceiver 1420 is configured to receive an update acknowledgement message sent by the first network device based on the first update request message, where the update acknowledgement message is used to instruct to update the network resource of the first network slice based on the second network resource. The processor 1410 is further configured to update the network resource of the first network slice to the second network resource based on the update acknowledgement message.

Optionally, the transceiver 1420 is further configured to receive a second update request message, where the second update request message carries service requirement information of a user. The processor 1410 is specifically configured to determine the network slice requirement information based on the service requirement information.

Optionally, the transceiver 1420 is further configured to receive a third update request message sent by a third network device, where the third update request message carries the network slice requirement information. The processor 1410 is specifically configured to determine the network slice requirement information based on the third update request message.

Optionally, the transceiver 1420 is further configured to: after sending the first update request message to the first network device and before the network resource of the first network slice is updated to the second network resource based on the update acknowledgement message, receive a resource acknowledgement message sent by the first network device, where the resource acknowledgement message carries information about the second network resource. The transceiver 1420 is further configured to send a resource accept message to the first network device when it is determined to accept updating of the network resource of the first network slice to the second network resource, where the resource accept message is used to indicate that updating of the network resource of the first network slice to the second network resource is accepted.

Optionally, the transceiver 1420 is further configured to: after the network resource of the first network slice is updated based on the update acknowledgement message, send information about the first network slice to a fourth network device, where the information includes the information about the second network resource.

It should be understood that the apparatus 1400 may be specifically the second network device in the foregoing embodiments, and may be configured to perform steps and/or procedures corresponding to the second network device in the foregoing method embodiments. Optionally, the memory 1430 may include a read-only memory and a random access memory, and provide an instruction and data to the processor. Apart of the memory may further include a non-volatile random access memory. For example, the memory may further store device type information. The processor 1410 may be configured to execute the instruction stored in the memory, and when the processor 1310 executes the instruction stored in the memory, the processor 1310 is configured to perform steps and/or procedures in the method embodiments corresponding to the second network device.

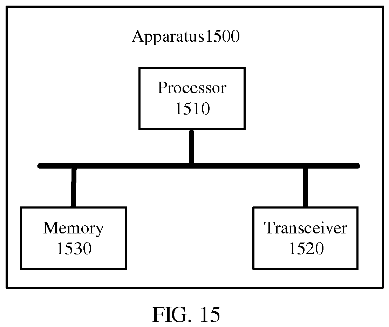

FIG. 15 shows another apparatus 1500 for managing a network slice according to an embodiment of this application. The apparatus 1500 includes a processor 1510, a transceiver 1520, a memory 1530, and a bus system 1540. The processor 1510, the transceiver 1520, and the memory 1530 are connected to each other by using the bus system 1540. The memory 1530 is configured to store an instruction. The processor 1510 is configured to execute the instruction stored in the memory 1530, to control the transceiver 1520 to send a signal and/or receive a signal.

The transceiver 1520 is configured to receive a reservation request message sent by a first network device, where the reservation request message carries information about a first network resource required by a first network slice. The processor 1510 is configured to reserve a second network resource based on the reservation request message received by the transceiver. The transceiver 1520 is configured to send a reservation acknowledgement message to the first network device, where the reservation acknowledgement message carries information about the second network resource and is used to update a network resource of the first network slice to the second network resource.

Optionally, the transceiver 1520 is further configured to: after sending the reservation acknowledgement message to the first network device, receive a configuration request message sent by the first network device, where the configuration request message carries the information about the second network resource. The processor 1510 is further configured to configure an association relationship between a network function of the first network slice and the second network resource based on the configuration request message. The transceiver is further configured to send a configuration acknowledgement message to the first network device.

Optionally, the transceiver 1520 is further configured to: after sending the reservation acknowledgement message to the first network device, receive a release request message sent by the first network device, where the release request message is used to request to release the second network resource. The processor 1510 is further configured to release the second network resource based on the release request message. The transceiver 1520 is further configured to send a release acknowledgement message to the first network device.

Optionally, the processor 1510 is further configured to: after the reservation acknowledgement message is sent to the first network device, update information about the first network slice, where the information includes the information about the second network resource.

It should be understood that the apparatus 1500 may be specifically the third network device in the foregoing embodiments, and may be configured to perform steps and/or procedures corresponding to the third network device in the foregoing method embodiments. Optionally, the memory 1530 may include a read-only memory and a random access memory, and provide an instruction and data to the processor. Apart of the memory may further include a non-volatile random access memory. For example, the memory may further store device type information. The processor 1510 may be configured to execute the instruction stored in the memory, and when the processor 1510 executes the instruction stored in the memory, the processor 1510 is configured to perform steps and/or procedures in the method embodiments corresponding to the third network device.

It should be understood that in the embodiment of this application, the processor in the foregoing apparatus may be a central processing unit (Central Processing Unit, CPU), or the processor may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor or the processor may be any conventional processor, or the like.

In an implementation process, steps in the foregoing methods can be implemented by using a hardware integrated logic circuit in the processor, or by using instructions in a form of software. The steps of the method disclosed with reference to the embodiments of this application may be directly performed by a hardware processor, or may be performed by using a combination of hardware in the processor and a software unit. A software unit may be located in a mature storage medium in the art, such as a random access memory, a flash memory, a read-only memory, a programmable read-only memory, an electrically erasable programmable memory, a register, or the like. The storage medium is located in the memory, and a processor reads instructions in the memory and completes the steps in the foregoing methods in combination with hardware of the processor. To avoid repetition, details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces, and the indirect couplings or communication connections between the apparatuses or units may be electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In addition, the function units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, and the protection scope of this application shall be subject to the protection scope of the claims.

## Claims

1. A method for managing a network slice, comprising:
receiving (S404), by a first network device, a first update request message sent by a second network device, wherein the first update request message carries network slice requirement information, and the network slice requirement information is used to indicate that a network resource of a first network slice needs to be updated to a first network resource;
determining (S405), by the first network device based on the first update request message, a second network resource that can be actually provided for the first network slice; and
sending (S416), by the first network device, an update acknowledgement message to the second network device, wherein the update acknowledgement message is used to instruct to update the network resource of the first network slice based on the second network resource;
wherein the determining, by the first network device based on the first update request message, a second network resource that can be actually provided for the first network slice comprises:
sending (S407), by the first network device, a reservation request message to a third network device when a third network resource currently occupied by the first network slice is comprised in the first network resource and it is determined that there is no available network resource, wherein the reservation request message carries information about the first network resource;
receiving (S409), by the first network device, a reservation acknowledgement message sent by the third network device based on the reservation request message, wherein the reservation acknowledgement message carries information about the second network resource; and
determining, by the first network device, the second network resource based on the reservation acknowledgement message, wherein the first network resource is different from the second network resource, and the second network resource is included in the first network resource;
wherein before the sending (S416), by the first network device, an update acknowledgement message to the second network device, the method further comprises:
sending (S413), by the first network device, a configuration request message to the third network device, wherein the configuration request message is used to request to configure an association relationship between a network function of the first network slice and the second network resource; and
receiving (S415), by the first network device, a configuration acknowledgement message sent by the third network device based on the configuration request message;
wherein before the sending, by the first network device, a configuration request message to the third network device, the method further comprises:
sending (S411), by the first network device, a resource acknowledgement message to the second network device, wherein the resource acknowledgement message carries the information about the second network resource; and
receiving (S412), by the first network device, a resource accept message sent by the second network device based on the resource acknowledgement message, wherein the resource accept message is used to indicate that updating of the network resource of the first network slice to the second network resource is accepted.

2. The method according to claim 1, wherein the determining, by the first network device based on the first update request message, a second network resource that can be actually provided for the first network slice comprises:
determining, by the first network device, the first network resource as the second network resource when the first network resource is comprised in a third network resource currently occupied by the first network slice.

3. A method for managing a network slice, comprising:
determining (S402), by a second network device, network slice requirement information, wherein the network slice requirement information is used to indicate that a network resource of a first network slice needs to be updated to a first network resource;
sending (S404), by the second network device, a first update request message to a first network device, wherein the first update request message carries the network slice requirement information;
receiving (S416), by the second network device, an update acknowledgement message sent by the first network device based on the first update request message, wherein the update acknowledgement message is used to instruct to update the network resource of the first network slice based on a second network resource and
updating (S417), by the second network device, the network resource of the first network slice to the second network resource based on the update acknowledgement message;
wherein after the sending (S404), by the second network device, a first update request message to a first network device and before the updating (S417), by the second network device, the network resource of the first network slice to the second network resource based on the update acknowledgement message, the method further comprises:
receiving (S411), by the second network device, a resource acknowledgement message sent by the first network device, wherein the resource acknowledgement message carries information about the second network resource, wherein the first network resource is different from the second network resource, and the second network resource is included in the first network resource;; and
sending (S412), by the second network device, a resource accept message to the first network device when the second network device determines to accept updating of the network resource of the first network slice to the second network resource, wherein the resource accept message is used to indicate that updating of the network resource of the first network slice to the second network resource is accepted.

4. The method according to claim 3, wherein the determining, by a second network device, network slice requirement information comprises:
receiving (S401), by the second network device, a second update request message, wherein the second update request message carries service requirement information of a user; and
determining (S402), by the second network device, the network slice requirement information based on the service requirement information.

5. The method according to claim 3, wherein the determining, by a second network device, network slice requirement information comprises:
receiving, by the second network device, a third update request message sent by a third network device, wherein the third update request message carries the network slice requirement information; and
determining, by the second network device, the network slice requirement information based on the third update request message.

6. The method according to any one of claims 3 to 5, wherein after the updating, by the second network device, the network resource of the first network slice based on the update acknowledgement message, the method further comprises:
sending, by the second network device, information about the first network slice to a fourth network device, wherein the information comprises the information about the second network resource.

7. A method for managing a network slice, comprising:
receiving (S407), by a third network device, a reservation request message sent by a first network device, wherein the reservation request message carries information about a first network resource required by a first network slice;
reserving (S408), by the third network device, a second network resource based on the reservation request message, wherein the first network resource is different from the second network resource, and the second network resource is included in the first network resource; and
sending (S409), by the third network device, a reservation acknowledgement message to the first network device, wherein the reservation acknowledgement message carries information about the second network resource and is used to update a network resource of the first network slice to the second network resource;
wherein after the sending (S409), by the third network device, a reservation acknowledgement message to the first network device, the method further comprises:
receiving (S413), by the third network device, a configuration request message sent by the first network dcvicc, wherein the configuration request message carries the information about the second network resource;
configuring (S414), by the third network device, an association relationship between a network function of the first network slice and the second network resource based on the configuration request message; and
sending (S415), by the third network device, a configuration acknowledgement message to the first network device.

8. An apparatus (1300) for managing a network slice, comprising:
a transceiver (1320),
a memory (1330), configured to store an instruction; and
a processor (1320), connected to the memory (1330) and the transceiver (1320), and configured to execute the instruction stored in the memory (!330), to perform the following steps when executing the instruction:
receiving, by using the transceiver (1320), a first update request message sent by a second network device, wherein the first update request message carries network slice requirement information, and the network slice requirement information is used to indicate that a network resource of a first network slice needs to be updated to a first network resource;
determining, based on the first update request message received by the transceiver (1320), a second network resource that can be actually provided for the first network slice, wherein the first network resource is different from the second network resource, and the second network resource is included in the first network resource; and
sending, by using the transceiver (1320), an update acknowledgement message to the second network device, wherein the update acknowledgement message is used to instruct to update the network resource of the first network slice based on the second network resource;
wherein the transceiver is specifically configured to:
send a reservation request message to a third network device when a third network resource currently occupied by the first network slice is comprised in the first network resource and it is determined that there is no available network resource, wherein the reservation request message carries information about the first network resource;
the transceiver is further configured to:
receive a reservation acknowledgement message sent by the third network device based on the reservation request message, wherein the reservation acknowledgement message carries information about the second network resource; and
the processor is specifically configured to:
determine the second network resource based on the reservation acknowledgement message, wherein the first network resource is different from the second network resource, and the second network resource is included in the first network resource;
wherein the transceiver (1320) is further configured to:
before sending the update acknowledgement message to the second network device, send a configuration request message to the third network device, wherein the configuration request message is used to request to configure an association relationship between a network function of the first network slice and the second network resource; and
the transceiver (1320) is further configured to:
receive a configuration acknowledgement message sent by the third network device based on the configuration request message;
before sending the configuration request message to the third network device, send a resource acknowledgement message to the second network device, wherein the resource acknowledgement message carries the information about the second network resource; and
the transceiver (1320) is further configured to:
receive a resource accept message sent by the second network device based on the resource acknowledgement message, wherein the resource accept message is used to indicate that updating of the network resource of the first network slice to the second network resource is accepted.

9. An apparatus (1400) for managing a network slice, comprising:
a transceiver (1420),
a memory (1430), configured to store an instruction; and
a processor (1410), connected to the memory (1430) and the transceiver (1420), and configured to execute the instruction stored in the memory (1430), to perform the following steps when executing the instruction:
determining network slice requirement information, wherein the network slice requirement information is used to indicate that a network resource of a first network slice needs to be updated to a first network resource;
sending, by using the transceiver (1420), a first update request message to a first network device based on the network slice requirement information determined by the processor, wherein the first update request message carries the network slice requirement information;
receiving, by using the transceiver (1420), an update acknowledgement message sent by the first network device based on the first update request message, wherein the update acknowledgement message is used to instruct to update the network resource of the first network slice based on a second network resource, wherein the first network resource is different from the second network resource, and the second network resource is included in the first network resource; and
updating the network resource of the first network slice to the second network resource based on the update acknowledgement message;
wherein the transceiver (1420) is further configured to:
after sending the first update request message to the first network device and before the network resource of the first network slice is updated to the second network resource based on the update acknowledgement message, receive a resource acknowledgement message sent by the first network device, wherein the resource acknowledgement message carries information about the second network resource; and
the transceiver (1420) is further configured to:
send a resource accept message to the first network device when it is determined to accept updating of the network resource of the first network slice to the second network resource, wherein the resource accept message is used to indicate that updating of the network resource of the first network slice to the second network resource is accepted.

10. An apparatus (1500) for managing a network slice, comprising:
a transceiver (1520),
a memory (1530), configured to store an instruction; and
a processor (1510), connected to the memory (1530) and the transceiver (1520), and configured to execute the instruction stored in the memory, to perform the following steps when executing the instruction:
receiving, by using the transceiver (1520), a reservation request message sent by a first network device, wherein the reservation request message carries information about a first network resource required by a first network slice;
reserving a second network resource based on the reservation request message received by the transceiver (1520), wherein the first network resource is different from the second network resource, and the second network resource is included in the first network resource; and
sending, by using the transceiver (1520), a reservation acknowledgement message to the first network device, wherein the reservation acknowledgement message carries information about the second network resource and is used to update a network resource of the first network slice to the second network resource;
wherein the transceiver is further configured to:
after sending the reservation acknowledgement message to the first network device, receive a configuration request message sent by the first network device, wherein the configuration request message carries the information about the second network resource;
the processor (1510) is further configured to:
configure an association relationship between a network function of the first network slice and the second network resource based on the configuration request message; and
the transceiver (1520) is further configured to:
send a configuration acknowledgement message to the first network device.

## Patentansprüche

1. Verfahren zum Verwalten eines Netzwerk-Slices, das Folgendes umfasst:
Empfangen (S404) einer ersten Aktualisierungsanforderungsnachricht durch eine erste Netzwerkvorrichtung, die von einer zweiten Netzwerkvorrichtung gesendet wird, wobei die erste Aktualisierungsanforderungsnachricht Informationen über die Anforderung eines Netzwerk-Slices trägt und die Informationen über die Anforderung des Netzwerk-Slices verwendet werden, um anzuzeigen, dass eine Netzwerkressource eines ersten Netzwerk-Slices auf eine erste Netzwerkressource aktualisiert werden soll;
Bestimmen (S405) einer zweiten Netzwerkressource durch die erste Netzwerkvorrichtung basierend auf der ersten Aktualisierungsanforderungsnachricht, die tatsächlich für den ersten Netzwerk-Slice bereitgestellt werden kann; und
Senden (S416) einer Aktualisierungsbestätigungsnachricht durch die erste Netzwerkvorrichtung an die zweite Netzwerkvorrichtung, wobei die Aktualisierungsbestätigungsnachricht verwendet wird, um ein Aktualisieren der Netzwerkressource des ersten Netzwerk-Slices basierend auf der zweiten Netzwerkressource anzuweisen;
wobei das Bestimmen einer zweiten Netzwerkressource durch die erste Netzwerkvorrichtung basierend auf der ersten Aktualisierungsanforderungsnachricht, die tatsächlich für den ersten Netzwerk-Slice bereitgestellt werden kann, Folgendes umfasst:
Senden (S407) einer Reservierungsanforderungsnachricht durch die erste Netzwerkvorrichtung an eine dritte Netzwerkvorrichtung, wenn eine dritte Netzwerkressource, die derzeit durch den ersten Netzwerk-Slice belegt ist, in der ersten Netzwerkressource enthalten ist und wenn bestimmt wird, dass keine verfügbare Netzwerkressource vorhanden ist, wobei die Reservierungsanforderungsnachricht Informationen über die erste Netzwerkressource trägt;
Empfangen (S409) einer Reservierungsbestätigungsnachricht durch die erste Netzwerkvorrichtung, die von der dritten Netzwerkvorrichtung basierend auf der Reservierungsanforderungsnachricht gesendet wird, wobei die Reservierungsbestätigungsnachricht Informationen über die zweite Netzwerkressource trägt; und
Bestimmen der zweiten Netzwerkressource durch die erste Netzwerkvorrichtung basierend auf der Reservierungsbestätigungsnachricht, wobei sich die erste Netzwerkressource von der zweiten Netzwerkressource unterscheidet und die zweite Netzwerkressource in die erste Netzwerkressource eingeschlossen ist;
wobei vor dem Senden (S416) einer Aktualisierungsbestätigungsnachricht durch die erste Netzwerkvorrichtung an die zweite Netzwerkvorrichtung das Verfahren ferner Folgendes umfasst:
Senden (S413) einer Konfigurationsanforderungsnachricht durch die erste Netzwerkvorrichtung an die dritte Netzwerkvorrichtung, wobei die Konfigurationsanforderungsnachricht verwendet wird, um eine Anforderung zum Konfigurieren einer Assoziationsbeziehung zwischen einer Netzwerkfunktion des ersten Netzwerk-Slices und der zweiten Netzwerkressource zu stellen; und
Empfangen (S415) einer Konfigurationsbestätigungsnachricht durch die erste Netzwerkvorrichtung, die von der dritten Netzwerkvorrichtung basierend auf der Konfigurationsanforderungsnachricht gesendet wird;
wobei vor dem Senden einer Konfigurationsanforderungsnachricht durch die erste Netzwerkvorrichtung an die dritte Netzwerkvorrichtung das Verfahren ferner Folgendes umfasst:
Senden (S411) einer Ressourcenbestätigungsnachricht durch die erste Netzwerkvorrichtung an die zweite Netzwerkvorrichtung, wobei die Ressourcenbestätigungsnachricht die Informationen über die zweite Netzwerkressource trägt; und
Empfangen (S412) einer Ressourcenannahmenachricht durch die erste Netzwerkvorrichtung, die von der zweiten Netzwerkvorrichtung gesendet wird, basierend auf der Ressourcenbestätigungsnachricht, wobei die Ressourcenannahmenachricht verwendet wird, um anzuzeigen, dass das Aktualisieren der Netzwerkressource des ersten Netzwerk-Slices auf die zweite Netzwerkressource akzeptiert wird.

2. Verfahren nach Anspruch 1, wobei das Bestimmen einer zweiten Netzwerkressource durch die erste Netzwerkvorrichtung basierend auf der ersten Aktualisierungsanforderungsnachricht, die tatsächlich für den ersten Netzwerk-Slice bereitgestellt werden kann, Folgendes umfasst:
Bestimmen der ersten Netzwerkressource als die zweite Netzwerkressource durch die erste Netzwerkvorrichtung, wenn die erste Netzwerkressource in einer dritten Netzwerkressource enthalten ist, die derzeit von dem ersten Netzwerk-Slice belegt ist.

3. Verfahren zum Verwalten eines Netzwerk-Slices, das Folgendes umfasst:
Bestimmen (S402) von Informationen über die Anforderung eines Netzwerk-Slices durch eine zweite Netzwerkvorrichtung, wobei die Informationen über die Anforderung des Netzwerk-Slices verwendet werden, um anzuzeigen, dass eine Netzwerkressource eines ersten Netzwerk-Slices auf eine erste Netzwerkressource aktualisiert werden soll;
Senden (S404) einer ersten Aktualisierungsanforderungsnachricht durch die zweite Netzwerkvorrichtung an eine erste Netzwerkvorrichtung, wobei die erste Aktualisierungsanforderungsnachricht die Informationen über die Anforderung des Netzwerk-Slices trägt;
Empfangen (S416) einer Aktualisierungsbestätigungsnachricht durch die zweite Netzwerkvorrichtung, die durch die erste Netzwerkvorrichtung basierend auf der ersten Aktualisierungsanforderungsnachricht gesendet wird, wobei die Aktualisierungsbestätigungsnachricht verwendet wird, um ein Aktualisieren der Netzwerkressource des ersten Netzwerk-Slices basierend auf einer zweiten Netzwerkressource anzuweisen, und Aktualisieren (S417) der Netzwerkressource des ersten Netzwerk-Slices auf die zweite Netzwerkressource durch die zweite Netzwerkvorrichtung basierend auf der Aktualisierungsbestätigungsnachricht;
wobei nach dem Senden (S404) einer ersten Aktualisierungsanforderungsnachricht durch die zweite Netzwerkvorrichtung an eine erste Netzwerkvorrichtung und vor dem Aktualisieren (S417) der Netzwerkressource des ersten Netzwerk-Slices durch die zweite Netzwerkvorrichtung an die zweite Netzwerkressource basierend auf der Aktualisierungsbestätigungsnachricht das Verfahren ferner Folgendes umfasst:
Empfangen (S411) einer Ressourcenbestätigungsnachricht durch die zweite Netzwerkvorrichtung, die von der ersten Netzwerkvorrichtung gesendet wird, wobei die Ressourcenbestätigungsnachricht Informationen über die zweite Netzwerkressource trägt, wobei sich die erste Netzwerkressource von der zweiten Netzwerkressource unterscheidet und die zweite Netzwerkressource in die erste Netzwerkressource eingeschlossen ist; und
Senden (S412) einer Ressourcenannahmenachricht an die erste Netzwerkvorrichtung durch die zweite Netzwerkvorrichtung, wenn die zweite Netzwerkvorrichtung bestimmt, das Aktualisieren der Netzwerkressource des ersten Netzwerk-Slices auf die zweite Netzwerkressource zu akzeptieren, wobei die Ressourcenannahmenachricht verwendet wird, um anzuzeigen, dass das Aktualisieren der Netzwerkressource des ersten Netzwerk-Slices auf die zweite Netzwerkressource akzeptiert wird.

4. Verfahren nach Anspruch 3, wobei das Bestimmen von Informationen über die Anforderung des Netzwerk-Slices durch eine zweite Netzwerkvorrichtung Folgendes umfasst:
Empfangen (S401) einer zweiten Aktualisierungsanforderungsnachricht durch die zweite Netzwerkvorrichtung, wobei die zweite Aktualisierungsanforderungsnachricht Dienstanforderungsinformationen eines Benutzers trägt; und
Bestimmen (S402) der Informationen über die Anforderung des Netzwerk-Slices durch die zweite Netzwerkvorrichtung basierend auf den Dienstanforderungsinformationen.

5. Verfahren nach Anspruch 3, wobei das Bestimmen von Informationen über die Anforderung des Netzwerk-Slices durch eine zweite Netzwerkvorrichtung Folgendes umfasst:
Empfangen einer dritten Aktualisierungsanforderungsnachricht durch die zweite Netzwerkvorrichtung, die von einer dritten Netzwerkvorrichtung gesendet wird, wobei die dritte Aktualisierungsanforderungsnachricht die Informationen über die Anforderung des Netzwerk-Slices trägt; und
Bestimmen der Informationen über die Anforderung des Netzwerk-Slices durch die zweite Netzwerkvorrichtung basierend auf der dritten Aktualisierungsanforderungsnachricht.

6. Verfahren nach einem der Ansprüche 3 bis 5, wobei nach dem Aktualisieren der Netzwerkressource des ersten Netzwerk-Slices durch die zweite Netzwerkvorrichtung basierend auf der Aktualisierungsbestätigungsnachricht das Verfahren ferner Folgendes umfasst:
Senden von Informationen über den ersten Netzwerk-Slice durch die zweite Netzwerkvorrichtung an eine vierte Netzwerkvorrichtung, wobei die Informationen die Informationen über die zweite Netzwerkressource umfassen.

7. Verfahren zum Verwalten eines Netzwerk-Slices, das Folgendes umfasst:
Empfangen (S407) einer Reservierungsanforderungsnachricht durch eine dritte Netzwerkvorrichtung, die von einer ersten Netzwerkvorrichtung gesendet wird, wobei die Reservierungsanforderungsnachricht Informationen über eine erste Netzwerkressource trägt, die von einem ersten Netzwerk-Slice benötigt wird;
Reservieren (S408) einer zweiten Netzwerkressource durch die dritte Netzwerkvorrichtung basierend auf der Reservierungsanforderungsnachricht, wobei sich die erste Netzwerkressource von der zweiten Netzwerkressource unterscheidet und die zweite Netzwerkressource in die erste Netzwerkressource eingeschlossen ist; und
Senden (S409) einer Reservierungsbestätigungsnachricht an die erste Netzwerkvorrichtung durch die dritte Netzwerkvorrichtung, wobei die Reservierungsbestätigungsnachricht Informationen über die zweite Netzwerkressource trägt und zum Aktualisieren einer Netzwerkressource des ersten Netzwerk-Slices auf die zweite Netzwerkressource verwendet wird;
wobei nach dem Senden (S409) einer Reservierungsbestätigungsnachricht durch die dritte Netzwerkvorrichtung an die erste Netzwerkvorrichtung das Verfahren ferner Folgendes umfasst:
Empfangen (S413) einer Konfigurationsanforderungsnachricht durch die dritte Netzwerkvorrichtung, die von der ersten Netzwerkvorrichtung gesendet wird, wobei die Konfigurationsanforderungsnachricht die Informationen über die zweite Netzwerkressource trägt;
Konfigurieren (S414) einer Assoziationsbeziehung zwischen einer Netzwerkfunktion des ersten Netzwerk-Slices und der zweiten Netzwerkressource durch die dritte Netzwerkvorrichtung basierend auf der Konfigurationsanforderungsnachricht; und
Senden (S415) einer Konfigurationsbestätigungsnachricht durch die dritte Netzwerkvorrichtung an die erste Netzwerkvorrichtung.

8. Gerät (1300) zum Verwalten eines Netzwerk-Slices, das Folgendes umfasst:
einen Sendeempfänger (1320), einen Speicher (1330), der zum Speichern einer Anweisung konfiguriert ist; und
einen Prozessor (1320), der mit dem Speicher (1330) und dem Sendeempfänger (1320) verbunden und so konfiguriert ist, dass er die im Speicher (1330) gespeicherte Anweisung ausführt, um beim Ausführen der Anweisung die folgenden Schritte auszuführen:
Empfangen einer ersten Aktualisierungsanforderungsnachricht durch Verwenden des Sendeempfängers (1320), die von einer zweiten Netzwerkvorrichtung gesendet wird, wobei die erste Aktualisierungsanforderungsnachricht Informationen über die Anforderung eines Netzwerk-Slices trägt und die Informationen über die Anforderung des Netzwerk-Slices verwendet werden, um anzuzeigen, dass eine Netzwerkressource eines ersten Netzwerk-Slices auf eine erste Netzwerkressource aktualisiert werden soll;
Bestimmen einer zweiten Netzwerkressource, die tatsächlich für den ersten Netzwerk-Slice bereitgestellt werden kann, basierend auf der ersten Aktualisierungsanforderungsnachricht, die von dem Sendeempfänger (1320) empfangen wird, wobei sich die erste Netzwerkressource von der zweiten Netzwerkressource unterscheidet und die zweite Netzwerkressource in die erste Netzwerkressource eingeschlossen ist; und
Senden einer Aktualisierungsbestätigungsnachricht durch Verwenden des Sendeempfängers (1320) an die zweite Netzwerkvorrichtung, wobei die Aktualisierungsbestätigungsnachricht verwendet wird, um ein Aktualisieren der Netzwerkressource des ersten Netzwerk-Slices basierend auf der zweiten Netzwerkressource anzuweisen;
wobei der Sendeempfänger speziell für Folgendes konfiguriert ist:
Senden einer Reservierungsanforderungsnachricht an eine dritte Netzwerkvorrichtung, wenn eine dritte Netzwerkressource, die derzeit von dem ersten Netzwerk-Slice belegt ist, in der ersten Netzwerkressource enthalten ist und bestimmt wird, dass keine verfügbare Netzwerkressource vorhanden ist, wobei die Reservierungsanforderungsnachricht Informationen über die erste Netzwerkressource trägt;
der Sendeempfänger ferner für Folgendes konfiguriert ist:
Empfangen einer Reservierungsbestätigungsnachricht, die von der dritten Netzwerkvorrichtung basierend auf der Reservierungsanforderungsnachricht gesendet wird, wobei die Reservierungsbestätigungsnachricht Informationen über die zweite Netzwerkressource trägt; und
der Prozessor speziell für Folgendes konfiguriert ist:
Bestimmen der zweiten Netzwerkressource basierend auf der Reservierungsbestätigungsnachricht, wobei sich die erste Netzwerkressource von der zweiten Netzwerkressource unterscheidet und die zweite Netzwerkressource in die erste Netzwerkressource eingeschlossen ist;
wobei der Sendeempfänger (1320) ferner für Folgendes konfiguriert ist:
Senden einer Konfigurationsanforderungsnachricht an die dritte Netzwerkvorrichtung vor dem Senden der Aktualisierungsbestätigungsnachricht an die zweite Netzwerkvorrichtung, wobei die Konfigurationsanforderungsnachricht verwendet wird, um ein Konfigurieren einer Assoziationsbeziehung zwischen einer Netzwerkfunktion des ersten Netzwerk-Slices und der zweiten Netzwerkressource anzufordern; und
der Sendeempfänger (1320) ferner für Folgendes konfiguriert ist:
Empfangen einer Konfigurationsbestätigungsnachricht, die von der dritten Netzwerkvorrichtung basierend auf der Konfigurationsanforderungsnachricht gesendet wird;
Senden einer Ressourcenbestätigungsnachricht an die zweite Netzwerkvorrichtung vor dem Senden der Konfigurationsanforderungsnachricht an die dritte Netzwerkvorrichtung, wobei die Ressourcenbestätigungsnachricht die Informationen über die zweite Netzwerkressource trägt; und
der Sendeempfänger (1320) ferner für Folgendes konfiguriert ist:
Empfangen einer Ressourcenannahmenachricht, die von der zweiten Netzwerkvorrichtung gesendet wird, basierend auf der Ressourcenbestätigungsnachricht, wobei die Ressourcenannahmenachricht verwendet wird, um anzuzeigen, dass das Aktualisieren der Netzwerkressource des ersten Netzwerk-Slices auf die zweite Netzwerkressource akzeptiert wird.

9. Gerät (1400) zum Verwalten eines Netzwerk-Slices, das Folgendes umfasst:
einen Sendeempfänger (1420), einen Speicher (1430), der zum Speichern einer Anweisung konfiguriert ist; und
einen Prozessor (1410), der mit dem Speicher (1430) und dem Sendeempfänger (1420) verbunden und so konfiguriert ist, dass er die im Speicher (1430) gespeicherte Anweisung ausführt, um beim Ausführen der Anweisung die folgenden Schritte auszuführen:
Bestimmen von Informationen über die Anforderung eines Netzwerk-Slices, wobei die Informationen über die Anforderung des Netzwerk-Slices verwendet werden, um anzuzeigen, dass eine Netzwerkressource eines ersten Netzwerk-Slices auf eine erste Netzwerkressource aktualisiert werden soll;
Senden einer ersten Aktualisierungsanforderungsnachricht an eine erste Netzwerkvorrichtung unter Verwendung des Sendeempfängers (1420) basierend auf den durch den Prozessor bestimmten Informationen über die Anforderung des Netzwerk-Slices, wobei die erste Aktualisierungsanforderungsnachricht die Informationen über die Anforderung des Netzwerk-Slices trägt;
Empfangen einer Aktualisierungsbestätigungsnachricht unter Verwendung des Sendeempfängers (1420), die von der ersten Netzwerkvorrichtung basierend auf der ersten Aktualisierungsanforderungsnachricht gesendet wird, wobei die Aktualisierungsbestätigungsnachricht verwendet wird, um ein Aktualisieren der Netzwerkressource des ersten Netzwerk-Slices basierend auf einer zweiten Netzwerkressource anzuweisen, wobei sich die erste Netzwerkressource von der zweiten Netzwerkressource unterscheidet und die zweite Netzwerkressource in die erste Netzwerkressource eingeschlossen ist; und
Aktualisieren der Netzwerkressource des ersten Netzwerk-Slices auf die zweite Netzwerkressource basierend auf der Aktualisierungsbestätigungsnachricht;
wobei der Sendeempfänger (1420) ferner für Folgendes konfiguriert ist:
Empfangen einer Ressourcenbestätigungsnachricht, die von der ersten Netzwerkvorrichtung gesendet wird, nach dem Senden der ersten Aktualisierungsanforderungsnachricht an die erste Netzwerkvorrichtung und vor dem Aktualisieren der Netzwerkressource des ersten Netzwerk-Slices basierend auf der Aktualisierungsbestätigungsnachricht auf die zweite Netzwerkressource, wobei die Ressourcenbestätigungsnachricht Informationen über die zweite Netzwerkressource trägt; und
der Sendeempfänger (1420) ferner für Folgendes konfiguriert ist:
Senden einer Ressourcenannahmenachricht an die erste Netzwerkvorrichtung, wenn bestimmt wird, dass das Aktualisieren der Netzwerkressource des ersten Netzwerk-Slices auf die zweite Netzwerkressource akzeptiert wird, wobei die Ressourcenannahmenachricht verwendet wird, um anzuzeigen, dass das Aktualisieren der Netzwerkressource des ersten Netzwerk-Slices auf die zweite Netzwerkressource akzeptiert wird.

10. Gerät (1500) zum Verwalten eines Netzwerk-Slices, das Folgendes umfasst:
einen Sendeempfänger (1520), einen Speicher (1530), der zum Speichern einer Anweisung konfiguriert ist; und
einen Prozessor (1510), der mit dem Speicher (1530) und dem Sendeempfänger (1520) verbunden und so konfiguriert ist, dass er die im Speicher gespeicherte Anweisung ausführt, um beim Ausführen der Anweisung die folgenden Schritte auszuführen:
Empfangen einer Reservierungsanforderungsnachricht durch Verwenden des Sendeempfängers (1520), die von einer ersten Netzwerkvorrichtung gesendet wird, wobei die Reservierungsanforderungsnachricht Informationen über eine erste Netzwerkressource trägt, die von einem ersten Netzwerk-Slice benötigt wird;
Reservieren einer zweiten Netzwerkressource basierend auf der durch den Sendeempfänger (1520) empfangenen Reservierungsanforderungsnachricht, wobei sich die erste Netzwerkressource von der zweiten Netzwerkressource unterscheidet und die zweite Netzwerkressource in die erste Netzwerkressource eingeschlossen ist; und
Senden einer Reservierungsbestätigungsnachricht an die erste Netzwerkvorrichtung durch Verwenden des Sendeempfängers (1520), wobei die Reservierungsbestätigungsnachricht Informationen über die zweite Netzwerkressource trägt und zum Aktualisieren einer Netzwerkressource des ersten Netzwerk-Slices auf die zweite Netzwerkressource verwendet wird;
wobei der Sendeempfänger ferner für Folgendes konfiguriert ist:
Empfangen einer Konfigurationsanforderungsnachricht nach dem Senden der Reservierungsbestätigungsnachricht an die erste Netzwerkvorrichtung, wobei die Konfigurationsanforderungsnachricht die Informationen über die zweite Netzwerkressource trägt;
wobei der Prozessor (1510) ferner für Folgendes konfiguriert ist:
Konfigurieren einer Assoziationsbeziehung zwischen einer Netzwerkfunktion des ersten Netzwerk-Slices und der zweiten Netzwerkressource basierend auf der Konfigurationsanforderungsnachricht; und
der Sendeempfänger (1520) ferner für Folgendes konfiguriert ist:
Senden einer Konfigurationsbestätigungsnachricht an die erste Netzwerkvorrichtung.

## Revendications

1. Procédé de gestion d'une tranche de réseau, comprenant :
la réception (S404), par un premier dispositif de réseau, d'un premier message de demande de mise à jour envoyé par un deuxième dispositif de réseau, le premier message de demande de mise à jour transportant des informations relatives aux exigences de tranche de réseau, et les informations relatives aux exigences de tranche de réseau étant utilisées pour indiquer qu'une ressource de réseau d'une première tranche de réseau doit être mise à jour sur une première ressource de réseau ;
la détermination (S405), par le premier dispositif de réseau sur la base du premier message de demande de mise à jour, d'une deuxième ressource de réseau qui peut effectivement être fournie pour la première tranche de réseau ; et
l'envoi (S416), par le premier dispositif de réseau, d'un message d'accusé de réception de mise à jour au deuxième dispositif de réseau, le message d'accusé de réception de mise à jour étant utilisé pour ordonner la mise à jour de la ressource de réseau de la première tranche de réseau sur la base de la deuxième ressource de réseau ;
la détermination, par le premier dispositif de réseau sur la base du premier message de demande de mise à jour, d'une deuxième ressource de réseau qui peut effectivement être fournie pour la première tranche de réseau comprenant :
l'envoi (S407), par le premier dispositif de réseau, d'un message de demande de réservation à un troisième dispositif de réseau lorsqu'une troisième ressource de réseau actuellement occupée par la première tranche de réseau est comprise dans la première ressource de réseau et qu'il est déterminé qu'il n'y a aucune ressource de réseau disponible, le message de demande de réservation transportant des informations concernant la première ressource de réseau ;
la réception (S409), par le premier dispositif de réseau, d'un message d'accusé de réception de réservation envoyé par le troisième dispositif de réseau sur la base du message de demande de réservation, le message d'accusé de réception de réservation transportant des informations concernant la deuxième ressource de réseau ; et
la détermination, par le premier dispositif de réseau, de la deuxième ressource de réseau sur la base du message d'accusé de réception de réservation, la première ressource de réseau étant différente de la deuxième ressource de réseau, et la deuxième ressource de réseau étant comprise dans la première ressource de réseau ;
avant l'envoi (S416), par le premier dispositif de réseau, d'un message d'accusé de réception de mise à jour au deuxième dispositif de réseau, le procédé comprenant en outre :
l'envoi (S413), par le premier dispositif de réseau, d'un message de demande de configuration au troisième dispositif de réseau, le message de demande de configuration étant utilisé pour demander de configurer une relation d'association entre une fonction de réseau de la première tranche de réseau et la deuxième ressource de réseau ; et
la réception (S415), par le premier dispositif de réseau, d'un message d'accusé de réception de configuration envoyé par le troisième dispositif de réseau sur la base du message de demande de configuration ;
avant l'envoi, par le premier dispositif de réseau, d'un message de demande de configuration au troisième dispositif de réseau, le procédé comprenant en outre :
l'envoi (S411), par le premier dispositif de réseau, d'un message d'accusé de réception de ressource au deuxième dispositif de réseau, le message d'accusé de réception de ressource transportant les informations concernant la deuxième ressource de réseau ; et
la réception (S412), par le premier dispositif de réseau, d'un message d'acceptation de ressource envoyé par le deuxième dispositif de réseau sur la base du message d'accusé de réception de ressource, le message d'acceptation de ressource étant utilisé pour indiquer que la mise à jour de la ressource de réseau de la première tranche de réseau sur la deuxième ressource de réseau est acceptée.

2. Procédé selon la revendication 1, dans lequel la détermination, par le premier dispositif de réseau sur la base du premier message de demande de mise à jour, d'une deuxième ressource de réseau qui peut effectivement être fournie pour la première tranche de réseau comprend :
la détermination, par le premier dispositif de réseau, de la première ressource de réseau en tant que deuxième ressource de réseau lorsque la première ressource de réseau est comprise dans une troisième ressource de réseau actuellement occupée par la première tranche de réseau.

3. Procédé de gestion d'une tranche de réseau, comprenant :
la détermination (S402), par un deuxième dispositif de réseau, d'informations relatives aux exigences de tranche de réseau, les informations relatives aux exigences de tranche de réseau étant utilisées pour indiquer qu'une ressource de réseau d'une première tranche de réseau doit être mise à jour sur une première ressource de réseau ;
l'envoi (S404), par le deuxième dispositif de réseau, d'un premier message de demande de mise à jour à un premier dispositif de réseau, le premier message de demande de mise à jour transportant les informations relatives aux exigences de tranche de réseau ;
la réception (S416), par le deuxième dispositif de réseau, d'un message d'accusé de réception de mise à jour envoyé par le premier dispositif de réseau sur la base du premier message de demande de mise à jour, le message d'accusé de réception de mise à jour étant utilisé pour ordonner de mettre à jour la ressource de réseau de la première tranche de réseau sur la base d'une deuxième ressource de réseau et
la mise à jour (S417), par le deuxième dispositif de réseau, de la ressource de réseau de la première tranche de réseau sur la deuxième ressource de réseau sur la base du message d'accusé de réception de mise à jour ;
après l'envoi (S404), par le deuxième dispositif de réseau, d'un premier message de demande de mise à jour à un premier dispositif de réseau et avant la mise à jour (S417), par le deuxième dispositif de réseau, de la ressource de réseau de la première tranche de réseau sur la deuxième ressource de réseau sur la base du message d'accusé de réception de mise à jour, le procédé comprenant en outre :
la réception (S411), par le deuxième dispositif de réseau, d'un message d'accusé de réception de ressource envoyé par le premier dispositif de réseau, le message d'accusé de réception de ressource transportant des informations concernant la deuxième ressource de réseau, la première ressource de réseau étant différente de la deuxième ressource de réseau, et la deuxième ressource de réseau étant comprise dans la première ressource de réseau ; et
l'envoi (S412), par le deuxième dispositif de réseau, d'un message d'acceptation de ressource au premier dispositif de réseau lorsque le deuxième dispositif de réseau détermine le fait d'accepter la mise à jour de la ressource de réseau de la première tranche de réseau sur la deuxième ressource de réseau, le message d'acceptation de ressource étant utilisé pour indiquer que la mise à jour de la ressource de réseau de la première tranche de réseau sur la deuxième ressource de réseau est acceptée.

4. Procédé selon la revendication 3, dans lequel la détermination, par un deuxième dispositif de réseau, des informations relatives aux exigences de tranche de réseau comprend :
la réception (S401), par le deuxième dispositif de réseau, d'un deuxième message de demande de mise à jour, le deuxième message de demande de mise à jour transportant des informations relatives aux exigences de service d'un utilisateur ; et
la détermination (S402), par le deuxième dispositif de réseau, des informations relatives aux exigences de tranche de réseau sur la base des informations relatives aux exigences de service.

5. Procédé selon la revendication 3, dans lequel la détermination, par un deuxième dispositif de réseau, des informations relatives aux exigences de tranche de réseau comprend :
la réception, par le deuxième dispositif de réseau, d'un troisième message de demande de mise à jour envoyé par un troisième dispositif de réseau, le troisième message de demande de mise à jour transportant les informations relatives aux exigences de tranche de réseau ; et
la détermination, par le deuxième dispositif de réseau, des informations relatives aux exigences de tranche de réseau sur la base du troisième message de demande de mise à jour.

6. Procédé selon l'une quelconque des revendications 3 à 5, dans lequel après la mise à jour, par le deuxième dispositif de réseau, de la ressource de réseau de la première tranche de réseau sur la base du message d'accusé de réception de mise à jour, le procédé comprend en outre :
l'envoi, par le deuxième dispositif de réseau, des informations concernant la première tranche de réseau à un quatrième dispositif de réseau, les informations comprenant les informations concernant la deuxième ressource de réseau.

7. Procédé de gestion d'une tranche de réseau, comprenant :
la réception (S407), par un troisième dispositif de réseau, d'un message de demande de réservation envoyé par un premier dispositif de réseau, le message de demande de réservation transportant des informations concernant une première ressource de réseau requise par une première tranche de réseau ;
la réservation (S408), par le troisième dispositif de réseau, d'une deuxième ressource de réseau sur la base du message de demande de réservation, la première ressource de réseau étant différente de la deuxième ressource de réseau, et la première ressource de réseau comportant la deuxième ressource de réseau ; et
l'envoi (S409), par le troisième dispositif de réseau, d'un message d'accusé de réception de réservation au premier dispositif de réseau, le message d'accusé de réception de réservation transportant des informations concernant la deuxième ressource de réseau et étant utilisé pour mettre à jour une ressource de réseau de la première tranche de réseau sur la deuxième ressource de réseau ;
après l'envoi (S409), par le troisième dispositif de réseau, d'un message d'accusé de réception de réservation au premier dispositif de réseau, le procédé comprenant en outre :
la réception (S413), par le troisième dispositif de réseau, d'un message de demande de configuration envoyé par le premier dispositif de réseau, le message de demande de configuration transportant les informations concernant la deuxième ressource de réseau ;
la configuration (S414), par le troisième dispositif de réseau, d'une relation d'association entre une fonction de réseau de la première tranche de réseau et de la deuxième ressource de réseau sur la base du message de demande de configuration ; et
l'envoi (S415), par le troisième dispositif de réseau, d'un message d'accusé de réception de configuration au premier dispositif de réseau.

8. Appareil (1300) de gestion d'une tranche de réseau, comprenant :
un émetteur-récepteur (1320),
une mémoire (1330) configurée pour stocker une instruction ; et
un processeur (1320), connecté à la mémoire (1330) et à l'émetteur-récepteur (1320), et configuré pour exécuter l'instruction stockée dans la mémoire (1330), afin d'effectuer les étapes suivantes lors de l'exécution de l'instruction :
la réception, en utilisant l'émetteur-récepteur (1320), d'un premier message de demande de mise à jour envoyé par un deuxième dispositif de réseau, le premier message de demande de mise à jour transportant des informations relatives aux exigences de tranche de réseau, et les informations relatives aux exigences de tranche de réseau étant utilisées pour indiquer qu'une ressource de réseau d'une première tranche de réseau doit être mise à jour sur une première ressource de réseau ;
la détermination, sur la base du premier message de demande de mise à jour reçu par l'émetteur-récepteur (1320), d'une deuxième ressource de réseau qui peut effectivement être fournie pour la première tranche de réseau, la première ressource de réseau étant différente de la deuxième ressource de réseau, et la deuxième ressource de réseau étant comprise dans la première ressource de réseau ; et
l'envoi, en utilisant l'émetteur-récepteur (1320), d'un message d'accusé de réception de mise à jour au deuxième dispositif de réseau, le message d'accusé de réception de mise à jour étant utilisé pour ordonner de mettre à jour la ressource de réseau de la première tranche de réseau sur la base de la deuxième ressource de réseau ;
l'émetteur-récepteur étant spécifiquement configuré pour :
envoyer un message de demande de réservation à un troisième dispositif de réseau lorsqu'une troisième ressource de réseau actuellement occupée par la première tranche de réseau est comprise dans la première ressource de réseau et qu'il est déterminé qu'il n'y a aucune ressource de réseau disponible, le message de demande de réservation transportant des informations concernant la première ressource de réseau ;
l'émetteur-récepteur étant en outre configuré pour :
recevoir un message d'accusé de réception de réservation envoyé par le troisième dispositif de réseau sur la base du message de demande de réservation, le message d'accusé de réception de réservation transportant des informations concernant la deuxième ressource de réseau ; et
le processeur étant spécifiquement configuré pour :
déterminer la deuxième ressource de réseau sur la base du message d'accusé de réception de réservation, la première ressource de réseau étant différente de la deuxième ressource de réseau, et la deuxième ressource de réseau étant comprise dans la première ressource de réseau ;
l'émetteur-récepteur (1320) étant en outre configuré pour :
avant l'envoi du message d'accusé de réception de mise à jour au deuxième dispositif de réseau, envoyer un message de demande de configuration au troisième dispositif de réseau, le message de demande de configuration étant utilisé pour demander de configurer une relation d'association entre une fonction de réseau de la première tranche de réseau et la deuxième ressource de réseau ; et
l'émetteur-récepteur (1320) étant en outre configuré pour :
recevoir un message d'accusé de réception de configuration envoyé par le troisième dispositif de réseau sur la base du message de demande de configuration ;
avant l'envoi du message de demande de configuration au troisième dispositif de réseau, envoyer un message d'accusé de réception de ressource au deuxième dispositif de réseau, le message d'accusé de réception de ressource transportant les informations concernant la deuxième ressource de réseau ; et
l'émetteur-récepteur (1320) étant en outre configuré pour :
recevoir un message d'acceptation de ressource envoyé par le deuxième dispositif de réseau sur la base du message d'accusé de réception de ressource, le message d'acceptation de ressource étant utilisé pour indiquer que la mise à jour de la ressource de réseau de la première tranche de réseau sur la deuxième ressource de réseau est acceptée.

9. Appareil (1400) de gestion d'une tranche de réseau, comprenant :
un émetteur-récepteur (1420),
une mémoire (1430) configurée pour stocker une instruction ; et
un processeur (1410), connecté à la mémoire (1430) et à l'émetteur-récepteur (1420), et configuré pour exécuter l'instruction stockée dans la mémoire (1430), afin d'effectuer les étapes suivantes lors de l'exécution de l'instruction :
la détermination des informations relatives aux exigences de tranche de réseau, les informations relatives aux exigences de tranche de réseau étant utilisées pour indiquer qu'une ressource de réseau d'une première tranche de réseau doit être mise à jour sur une première ressource de réseau ;
l'envoi, en utilisant l'émetteur-récepteur (1420), d'un premier message de demande de mise à jour à un premier dispositif de réseau sur la base des informations relatives aux exigences de tranche de réseau déterminées par le processeur, le premier message de demande de mise à jour transportant les informations relatives aux exigences de tranche de réseau ;
la réception, en utilisant l'émetteur-récepteur (1420), d'un message d'accusé de réception de mise à jour envoyé par le premier dispositif de réseau sur la base du premier message de demande de mise à jour, le message d'accusé de réception de mise à jour étant utilisé pour ordonner de mettre à jour la ressource de réseau de la première tranche de réseau sur la base d'une deuxième ressource de réseau, la première ressource de réseau étant différente de la deuxième ressource de réseau, et la première ressource de réseau comportant la deuxième ressource de réseau ; et
la mise à jour de la ressource de réseau de la première tranche de réseau sur la deuxième ressource de réseau sur la base du message d'accusé de réception de mise à jour ;
l'émetteur-récepteur (1420) étant en outre configurée pour :
après l'envoi du premier message de demande de mise à jour au premier dispositif de réseau et avant la mise à jour de la ressource de réseau de la première tranche de réseau sur la deuxième ressource de réseau sur la base du message d'accusé de réception de mise à jour, recevoir un message d'accusé de réception de ressource envoyé par le premier dispositif de réseau, le message d'accusé de réception de ressource transportant des informations concernant la deuxième ressource de réseau ; et
l'émetteur-récepteur (1420) étant en outre configuré pour :
envoyer un message d'acceptation de ressource au premier dispositif de réseau lorsque le fait d'accepter la mise à jour de la ressource de réseau de la première tranche de réseau sur la deuxième ressource de réseau est déterminé, le message d'acceptation de ressource étant utilisé pour indiquer que la mise à jour de la ressource de réseau de la première tranche de réseau sur la deuxième ressource de réseau est acceptée.

10. Appareil (1500) de gestion d'une tranche de réseau, comprenant :
un émetteur-récepteur (1520),
une mémoire (1530) configurée pour stocker une instruction ; et
un processeur (1510), connecté à la mémoire (1530) et à l'émetteur-récepteur (1520), et configuré pour exécuter l'instruction stockée dans la mémoire, afin d'effectuer les étapes suivantes lors de l'exécution de l'instruction :
la réception, en utilisant l'émetteur-récepteur (1520), d'un message de demande de réservation envoyé par un premier dispositif de réseau, le message de demande de réservation transportant des informations concernant une première ressource de réseau requise par une première tranche de réseau ;
la réservation d'une deuxième ressource de réseau sur la base du message de demande de réservation reçu par l'émetteur-récepteur (1520), la première ressource de réseau étant différente de la deuxième ressource de réseau, et la première ressource de réseau comportant la deuxième ressource de réseau ; et
l'envoi, à l'aide de l'émetteur-récepteur (1520), d'un message d'accusé de réception de réservation au premier dispositif de réseau, le message d'accusé de réception de réservation transportant des informations concernant la deuxième ressource de réseau et étant utilisé pour mettre à jour une ressource de réseau de la première tranche de réseau sur la deuxième ressource de réseau ;
l'émetteur-récepteur étant en outre configuré pour :
après l'envoi du message d'accusé de réception de réservation au premier dispositif de réseau, recevoir un message de demande de configuration envoyé par le premier dispositif de réseau, le message de demande de configuration transportant les informations concernant la deuxième ressource de réseau ;
le processeur (1510) est en outre configuré pour :
configurer une relation d'association entre une fonction de réseau de la première tranche de réseau et de la deuxième ressource de réseau sur la base du message de demande de configuration ; et
l'émetteur-récepteur (1520) étant en outre configuré pour :
envoyer un message d'accusé de réception de configuration au premier dispositif de réseau.
